(19) Europäisches Patentamt
European Patent Office
Office européen des brevets

(11) **EP 2 893 431 B1**

## (12) FASCICULE DE BREVET EUROPEEN

(45) Date de publication et mention de la délivrance du brevet:
**02.11.2016 Bulletin 2016/44**

(21) Numéro de dépôt: **13766605.3**

(22) Date de dépôt: **02.09.2013**

(51) Int Cl.:
**H04L 9/00** (2006.01)

(86) Numéro de dépôt international:
**PCT/FR2013/052013**

(87) Numéro de publication internationale:
**WO 2014/037657 (13.03.2014 Gazette 2014/11)**

## (54) PROTECTION CONTRE CANAUX AUXILIAIRES

SCHUTZ VOR SEITENKANALANGRIFFE

PROTECTION AGAINST SIDE CHANNEL ATTACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2012 FR 1258237**

(43) Date de publication de la demande:
**15.07.2015 Bulletin 2015/29**

(73) Titulaire: **Morpho**
**92130 Issy-les-Moulineaux (FR)**

(72) Inventeurs:
• **PEPIN, Cyrille**
**F-92130 Issy-les-Moulineaux (FR)**
• **LECOCQ, François**
**F-92130 Issy-les-Moulineaux (FR)**
• **SERVANT, Victor**
**F-92130 Issy-les-Moulineaux (FR)**

(74) Mandataire: **Cabinet Plasseraud**
**66, rue de la Chaussée d'Antin**
**75440 Paris Cedex 09 (FR)**

(56) Documents cités:
• **Sheikh Muhammad Farhan: "High Data Rate 8-Bit Crypto Processor", Proceedings of the ISSA 2004 Enabling Tomorrow Conference, 2004, 1 janvier 2004 (2004-01-01), pages 1-11, XP055072228, Extrait de l'Internet: URL:http://icsa.cs.up.ac.za/issa/2004/Proc eedings/Full/008.pdf [extrait le 2013-07-22]**
• **BO YU ET AL: "An AES chip with DPA resistance using hardware-based random order execution", JOURNAL OF SEMICONDUCTORS, vol. 33, no. 6, 1 juin 2012 (2012-06-01), page 065009, XP055072216, ISSN: 1674-4926, DOI: 10.1088/1674-4926/33/6/065009**
• **Guido Bertone ET AL: "Efficient Software Implementation of AES on 32-Bit Platforms", Cryptographic Hardware and Embedded Systems - CHES 2002, Lecture Notes in Computer Science, 2003, Volume 2523/2003, 1 janvier 2003 (2003-01-01), pages 129-142, XP055072101, Extrait de l'Internet: URL:ftp://www.kemt.fei.tuke.sk/KEMT411_ESM /_materialy/Diplomanti/AES/25230159.pdf [extrait le 2013-07-19] cité dans la demande**
• **GLADMAN B: "A Specification for Rijndael, the AES Algorithm", INTERNET CITATION, 13 mars 2003 (2003-03-13), XP002376287, Extrait de l'Internet: URL:http://web.archive.org/web/20030313050 018/fp.gladman.plus.com/cryptography_techn ology/rijndael/aesspec.pdf [extrait le 2006-04-07]**

**EP 2 893 431 B1**

**Description**

L'invention concerne la protection de dispositifs électroniques mettant en oeuvre des algorithmes cryptographiques (tels que l'AES) contre des attaques par canal auxiliaire.

Les attaques par canaux auxiliaires exploitent des propriétés physiques du dispositif électronique attaqué lorsqu'il met en oeuvre un algorithme cryptographique (la mise en oeuvre pouvant être logicielle, matérielle, voire mixte : logicielle et matérielle). Le fait que l'algorithme cryptographique soit sécurisé d'un point de vue purement mathématique (c'est-à-dire en théorie) ne garantit pas nécessairement que la mise en oeuvre pratique de cet algorithme cryptographique par un dispositif électronique donné soit sécurisée.

Il est ainsi connu d'attaquer un dispositif électronique de façon non-invasive en procédant à une observation extérieure de certains de ces paramètres de fonctionnement.

Un attaquant peut par exemple se livrer à une cryptanalyse acoustique consistant à étudier le bruit éventuellement généré par le dispositif électronique lorsqu'il met en oeuvre l'algorithme cryptographique. En effet, le dispositif électronique peut émettre un bruit (ou des vibrations éventuellement inaudibles) variant en intensité et en nature selon les opérations effectuées. Des condensateurs qui se chargent ou se déchargent peuvent notamment émettre des claquements qui peuvent être mesurables.

Il est également connu d'analyser les émanations électromagnétiques du dispositif électronique, ou d'analyser son image thermique. En effet, le rayonnement électromagnétique d'un dispositif électronique, par exemple d'un processeur, dépend de ce que ce dispositif est en train d'effectuer, par exemple d'une instruction que le processeur est en train d'exécuter ou d'une donnée que le processeur est en train de manipuler.

Les attaquants peuvent également analyser la consommation électrique du dispositif électronique lors de l'exécution de l'algorithme cryptographique. Différentes parties de l'algorithme cryptographique peuvent engendrer des consommations caractéristiques. Il est donc possible d'analyser la consommation électrique instantanée d'un dispositif électronique, et de distinguer ainsi les tâches accomplies en fonction de la consommation électrique qu'elles requièrent.

Ces attaques peuvent être combinées pour obtenir des informations secrètes telles qu'une clé de chiffrement utilisée par l'algorithme cryptographique. La mise en oeuvre de ces attaques est généralement étroitement liée au dispositif électronique attaqué.

Ainsi, ces attaques peuvent le cas échéant permettre, via l'utilisation d'un canal auxiliaire (non envisagé ou non suffisamment protégé par le concepteur du dispositif électronique), tel qu'un canal d'ondes acoustiques, un canal électromagnétique, ou encore un canal thermique (les exemples de canaux donnés ne sont nullement limitatifs) d'affecter la sécurité de la mise en oeuvre considérée de l'algorithme cryptographique.

Un algorithme cryptographique est un algorithme qui vise à protéger une information, en assurant par exemple sa confidentialité, son authenticité, ou son intégrité, grâce aux mathématiques. Un algorithme cryptographique s'appuie souvent sur une ou plusieurs clés, qui peuvent être notamment secrètes, privées, ou publiques. Certains algorithmes cryptographiques n'utilisent pas de clé, c'est le cas notamment de certaines fonctions de hachage (telles que les fonctions SHA-1, MD5, SHA-256, RIPEMD-160, etc.). Parmi les algorithmes cryptographiques on trouve notamment des algorithmes de chiffrement (qui permettent de rendre une information inintelligible) et des algorithmes de déchiffrement (qui permettent de récupérer l'information d'origine à partir d'une information chiffrée), des algorithmes de signature électronique, de vérification de signature, d'authentification, de vérification d'authentification, etc. Parmi les algorithmes cryptographiques s'appuyant sur des clés, certains sont dits symétriques (par exemple les algorithmes DES, 3DES, AES, RC4, HMAC, etc.). Certains algorithmes symétriques sont spécialisés (par exemple l'algorithme HMAC sert pour la signature/vérification de signature mais pas pour le chiffrement/déchiffrement). Les algorithmes symétriques tirent leur nom du fait qu'ils utilisent la même clé (on parle généralement de clé secrète) pour chiffrer et pour déchiffrer, ou encore pour signer et vérifier une signature, etc. Ainsi, les algorithmes cryptographiques symétriques imposent ils à deux parties les utilisant pour sécuriser leurs communications de partager des clés. L'algorithme AES (« Advanced Encryption Standard ») est notable car il est l'algorithme qui a été choisi en 2000 par le National Institute of Standards and Technology (ou « NIST ») afin de devenir l'algorithme de chiffrement symétrique standard pour le gouvernement des Etats-Unis d'Amérique. D'autres algorithmes cryptographiques sont qualifiés d'asymétriques (par exemple les algorithmes DSA, RSA, les courbes elliptiques, etc.) car une clé différente est utilisée par les parties à une communication. Chaque partie dispose d'une clé privée (on parle plutôt de clé privée que de clé secrète en pareil cas, même si l'on rencontre parfois des abus de langage) et d'une clé publique associée. Par exemple une partie peut utiliser une de ses clés privées pour signer une information, et c'est une clé publique correspondante qui est utilisée par l'autre partie pour vérifier la signature, ou encore une partie peut utiliser une clé publique appartenant à une autre partie pour chiffrer une information, et l'autre partie peut alors utiliser sa clé privée correspondante pour déchiffrer l'information.

Les algorithmes cryptographiques sont souvent décrits de façon très précise dans des spécifications accessibles à tous, la sécurité d'un algorithme cryptographique n'étant généralement pas liée au caractère secret ou non de son fonctionnement (les algorithmes qui ne sont présumés sûrs qu'en raison de leur caractère secret finissent souvent par être cassés par ingénierie inverse). Les spécifications permettent de déterminer ce qu'un algorithme doit produire en sortie lorsqu'on lui donne une certaine information en entrée. Ceci permet de s'assurer de l'interopérabilité de l'algorithme cryptographique, c'est-à-dire que des implémentations distinctes doivent pouvoir fonctionner entre elles. Par exemple, on peut légitimement s'attendre à ce qu'une information chiffrée par toute implémentation d'un algorithme de chiffrement puisse être déchiffrée par toute implémentation de l'algorithme de déchiffrement correspondant. Cependant, ceci ne signifie pas qu'il n'existe qu'une implémentation possible de chaque algorithme cryptographique. Au contraire, il existe des multitudes d'implémentations possibles pour chaque algorithme cryptographique, de même qu'il existe des multitudes de manières différentes d'effectuer un même calcul. Par exemple, pour calculer $X^2+2X+1$, on peut notamment calculer $X*X$, puis $2*X$, puis ajouter les deux termes puis ajouter 1, ou bien calculer $X+1$, multiplier le résultat par X, puis ajouter 1, ou encore calculer $X+1$ et élever le résultat au carré.

On aurait pu penser que la sécurité d'un algorithme cryptographique ne dépend que de sa définition mathématique (et des éventuelles clés qui sont utilisées, lorsque ces dernières sont secrètes ou privées), telle qu'elle ressort d'une spécification, et non de la façon exacte dont il calcule le résultat défini dans la spécification. En réalité, il n'en est rien, en général, comme cela a été illustré plus haut à l'aide de l'exemple des attaques par canaux auxiliaires. Il s'avère que la sécurité d'une mise en oeuvre particulière d'un algorithme cryptographique ne dépend pas seulement de l'algorithme cryptographique lui-même, mais également de la façon dont il est implémenté, et d'autres facteurs tels que les caractéristiques du dispositif électronique chargé de l'exécuter.

Il est notamment bien connu que lorsqu'un dispositif électronique non protégé exécute un logiciel mettant en oeuvre un algorithme cryptographique de manière « naïve » c'est-à-dire d'une manière qui se contente de produire le résultat numérique attendu selon la spécification (tel qu'un résultat de chiffrement) à partir d'une entrée donnée, il est souvent possible d'effectuer une écoute passive du dispositif électronique et d'obtenir des informations critiques sur le déroulement de l'algorithme cryptographique. L'écoute passive présente l'avantage d'être non invasive. Le dispositif électronique n'est pas endommagé, et son propriétaire ne se rend pas nécessairement compte qu'il a été attaqué. Ainsi, le dispositif a pu être subtilisé et rendu sans que son propriétaire ne le soupçonne, ou simplement utilisé en l'absence du propriétaire, voire espionné en présence du propriétaire, sans que ce dernier ne le remarque (par exemple par un module dissimulé entre le dispositif électronique et son alimentation électrique). Ainsi, le propriétaire d'un dispositif électronique dont une clé AES a été extraite par un attaquant n'est pas amené à révoquer sa clé AES (il n'a aucune raison de penser qu'il a été attaqué).

L'attaquant peut ensuite utiliser librement la clé AES jusqu'à ce que le propriétaire finisse par se rendre compte que des opérations qu'il n'a pas effectuées (par exemple des transferts de fonds électroniques), lui sont prétendument attribuées, ou qu'un tiers a manifestement eu accès à des informations confidentielles (par exemple un concurrent répondant à plusieurs reprises à de mêmes appels d'offres en étant de très peu le moins disant).

Une écoute passive élémentaire peut consister simplement à identifier une caractéristique donnée en fonction d'une mesure donnée sur le dispositif électronique ciblé. C'est le cas par exemple des attaques dites SPA (de l'anglais « Simple Power Analysis »). Par exemple, lors d'une exponentiation modulaire effectuée dans une implémentation « naïve » de l'algorithme RSA, la consommation électrique est très différente lorsqu'un bit de l'exposant est égal à 1 (forte consommation) et lorsque ce bit est égal à 0 (consommation plus faible). En effet, dans les implémentations communes, un bit à 1 implique à la fois une opération d'élévation au carré et une opération de multiplication (dite « square and multiply » en anglais, la traduction française pouvant être : « élève au carré et multiplie »), alors qu'un bit à 0 n'implique qu'une opération d'élévation au carré. On peut ainsi, en observant la trace de la consommation électrique lors de l'exponentiation modulaire, repérer les séries de 1 et de 0 de l'exposant, qui correspondent à des fluctuations de consommation électrique. Or l'exposant RSA, dans le cas où il s'agit d'un exposant privé, est une donnée extrêmement confidentielle constitutive de la clé privée RSA, qui en général n'est pas censée être connue de quiconque en dehors du dispositif électronique. Obtenir la clé privée de signature d'une personne permet ainsi de signer en son nom, obtenir sa clé privée de déchiffrement permet de déchiffrer ses messages.

Cependant, ces écoutes (simples à mettre en oeuvre) ne sont pas toujours efficaces. On connaît des écoutes plus élaborées, telles que les attaques dites DPA (de l'anglais « Differential Power Analysis »), durant lesquelles un attaquant exécute un algorithme cryptographique à de multiples reprises, et enregistre à chaque fois les traces produites (par exemple les traces de consommation de courant). Par la suite l'attaquant effectue des calculs statistiques sur la base des multiples enregistrements, et obtient des informations d'une façon plus fiable et plus difficile à empêcher.

Afin de se prémunir contre ces attaques, il est possible de sécuriser le dispositif électronique lui-même. Par exemple, on peut superposer un bruit sur l'alimentation électrique afin de rendre son exploitation plus difficile, lisser la consommation électrique (par exemple avec des condensateurs), limiter les émissions électromagnétiques par des blindages adéquats, etc. On peut aussi utiliser une horloge interne particulière, ayant pour caractéristique d'avoir une fréquence de fonctionnement variable de manière aléatoire, ce qui rend les mesures difficiles à exploiter (les opérations de l'algorithme cryptographique étant alors effectuées à une cadence qui ne cesse de varier, et qui est a priori inconnue de l'attaquant). Il existe également d'autres techniques, consistant par exemple à contrôler l'accès physique et/ou l'accès logique au dispositif électronique. Par exemple, les cartes à puce mettant en oeuvre des algorithmes cryptographiques à clé privée protègent généralement les opérations concernées par un code PIN. Ainsi, une personne qui volerait temporairement la carte à puce en espérant en extraire la clé privée puis rendre la carte à son propriétaire sans qu'il ne s'en rende compte, ne pourrait exécuter l'algorithme concerné sans présenter le bon code PIN (qu'un utilisateur averti apprend par coeur et ne communique à personne), et ne serait donc pas nécessairement en mesure d'effectuer l'attaque.

Ces techniques de contremesures sont utiles, mais généralement insuffisantes à elles seules, car elles ne protègent pas contre tous les scénarios d'attaques. Une autre méthode de protection consiste à utiliser un procédé de sécurisation de l'algorithme cryptographique, consistant à implémenter l'algorithme d'une manière telle qu'il génère le minimum de fluctuations (électriques ou autres).

Par exemple, il est possible de modifier l'implémentation d'un algorithme RSA utilisant une clé privée de façon à ce qu'il effectue des opérations ayant la même signature (électrique, électromagnétique, etc.) lors d'un bit 1 ou lors d'un bit 0 dans l'exposant privé de la clé privée. Par exemple on peut effectuer un « square and multiply » quoi qu'il en soit, le résultat de l'opération de multiplication n'étant utilisé que dans le cas où le bit est à 1. Il faut évidemment être très vigilant, et s'arranger pour que l'implémentation soit aussi symétrique que possible. Par exemple s'il y a un test vérifiant que le résultat de la multiplication doit ou non être utilisé, il faut que ce test se comporte de la même manière quelle que soit son issue (ou du moins d'une manière aussi proche que possible), sinon une écoute passive pourrait cibler ce test afin de déterminer s'il s'agissait d'un bit à 0 ou d'un bit à 1.

Un autre procédé de sécurisation (qui peut être complémentaire du précédent) consiste à masquer les données sensibles. Les données sensibles peuvent être par exemple des clés cryptographiques, et/ou un message d'entrée devant par exemple être chiffré par l'algorithme cryptographique, et/ou certaines données intermédiaires manipulées durant l'exécution de l'algorithme cryptographique. En effet, dans certains cas l'attaquant peut connaître voire choisir un message d'entrée à traiter par l'algorithme cryptographique, et faire des prédictions bien plus précises sur le calcul en cours. Le fait que le message d'entrée et/ou les données intermédiaires soient masqués d'une manière a priori imprévisible par l'attaquant lui retire ainsi une partie de l'information et peut ainsi compliquer singulièrement l'attaque. De plus, pour peu que le masquage soit différent lors de chaque utilisation de l'algorithme cryptographique, l'analyse statistique peut être compliquée. Par exemple, plusieurs procédés de protection par masquage de l'algorithme AES ont été proposés pour se prémunir des attaques par canaux cachés. Une solution traditionnelle est un masquage du type additif où les données manipulées x sont remplacées par des données masquées x + m (+ désignant ici le « ou exclusif »). Cela permet de passer facilement à travers les opérations linéaires de l'algorithme. Les tables (non-linéaires) de substitution S[] sont alors remplacées par des tables masquées générées à la volée après le tirage d'un nouveau masque (ou toutes pré-stockées en mémoire, si la quantité de mémoire le permet). Ainsi, une opération non linéaire masquée correspondant à une table de substitution masquée S'[], appliquée à une donnée x masquée par un masque aléatoire m1 peut s'écrire sous la forme :

$$y' = S'[x + m_1] = y + m_2 = S[x] + m_2$$

$m_2$ étant un masque correspondant. En fin d'algorithme, on démasque le résultat pour obtenir le résultat final (donnée originale chiffrée et non masquée).

Les attaques parviennent parfois néanmoins à surmonter les difficultés induites par les masquages de l'état de l'art. Notamment, certaines attaques telles que les attaques HO-DPA (de l'anglais « High Order Differential Power Analysis ») peuvent s'avérer particulièrement difficiles à éviter dans certaines circonstances. Ceci est expliqué notamment dans l'article « On Second-Order Differential Power Analysis » de Marc Joye, Pascal Paillier et Berry Schoenmakers, publié dans Cryptographic Hardware and Embedded Systems, CHES 2005, Lecture Notes in Computer Science 3659 (2005) 293-308, Springer-Verlag. Ainsi, lorsque l'attaquant parvient à corréler une consommation de puissance (ou une autre information de ce type) plus d'une fois par calcul, il peut parfois s'affranchir du masquage.

Les mises en oeuvre de l'AES utilisent parfois d'autres mécanismes de sécurisation face aux attaques physiques (notamment les attaques par canaux auxiliaires). C'est souvent le cas des implémentations de l'AES sur des dispositifs électroniques sécurisés, par exemple des cartes à puce.

Plusieurs attaques sont susceptibles de compromettre les schémas de protection existants de l'AES, qui impliquent pourtant déjà souvent une mise en oeuvre de l'AES exigeant une consommation mémoire plus importante ainsi qu'un temps d'exécution plus long qu'un AES non modifié. De plus, les composants dédiés (solutions purement matérielles) à cet algorithme AES ne sont pas toujours disponibles et une implémentation logicielle est alors nécessaire, ce qui peut ralentir encore davantage l'exécution de l'algorithme (et dégrader ses performances du point de vue de l'utilisateur final).

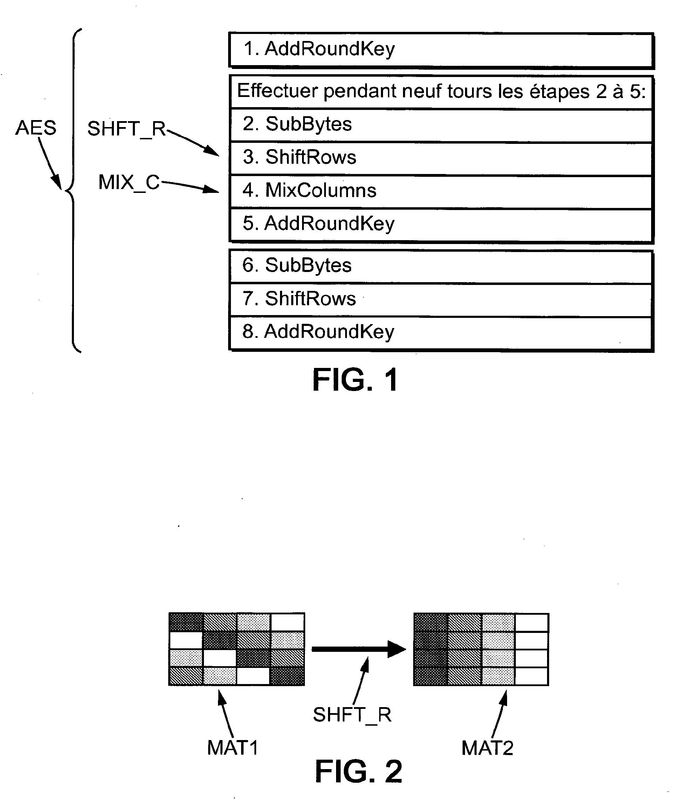

L'AES opère sur une entrée appelée tableau d'états, qui contient 16 octets (4x4). Il peut employer des clés de 128, 192 ou 256 bits. Pour simplifier, les exemples donnés s'appuieront sur le cas 128 bits sauf mention contraire. La structure de l'opération de chiffrement par AES est celle qui est illustrée sur la figure 1 (les noms de fonctions originaux sont conservés). La fonction de déchiffrement AES, structurellement similaire, est bien connue de l'homme du métier.

Comme rappelé précédemment, une méthode de protection classique contre les attaques par analyse de consommation consiste à recalculer la partie «SubBytes» de l'algorithme en y ajoutant des valeurs de masquage. Cette méthode nécessite l'utilisation d'une table de 256 octets en mémoire RAM.

Une autre méthode (la randomisation, parfois appelée hasardisation en français) peut se superposer à celle-ci afin de protéger d'autant plus la mise en oeuvre de l'AES. Les opérations internes sont alors effectuées dans un ordre au moins partiellement aléatoire.

La plupart des attaques par analyse connues ne concernent que les deux premiers ou deux derniers tours de l'AES. Le masquage et la randomisation ne sont alors utiles que pour ces tours, le reste peut être laissé tel quel (mise en oeuvre non modifiée). Un article récent (« Principles on the Security of AES against First and Second-Order Differential Power Analysis », Jiqiang Lu, Jing Pan, et Jerry den Hartog in ACNS 2010, LNCS 6123) suggère cependant qu'il serait possible d'attaquer quelques tours de plus, et il pourrait donc être opportun d'appliquer des protections à ces autres tours également.

Or, il n'existe pas de moyen efficace pour appliquer la randomisation à plus de deux tours internes de l'AES, voire à l'AES dans sa totalité.

De plus, la technique de re-calcul et masquage de la boîte de substitution communément employée, telle que décrite dans l'article « An AES Smart Card Implementation Résistant to Power Analysis Attacks » (Herbst, C., Oswald, E., Mangard, S., In: Zhou, J., Yung, M., Bao, F. (eds.) ACNS 2006. LNCS, vol. 3989, pp. 239-252, Springer, Heidelberg 2006) réduit l'intérêt d'une version plus légère en mémoire de l'AES spécifiée dans le standard concerné (AES Proposal: Rijndael, Document version 2, Date: 03/09/99, Joan Daemen, Vincent Rijmen, disponible à l'adresse suivante, comprenant deux m dans le mot « amended » : csrc.nist.gov/archive/aes/rijndael/Rijndael-ammended.pdf).

Pour des environnements 32-bits (ou plus), il est possible d'accélérer l'AES en combinant les opérations « SubBytes » et « ShiftRows » avec « MixColumns », et en les transformant en une séquence de recherches dans des LUTs (LUT signifie « look-up table » en anglais, et est parfois traduit par table de correspondances en français). Ceci nécessite quatre tables de 256 entrées de 32 bits, soit en tout 4096 octets de mémoire (un kilooctet par LUT). Un tour peut alors être effectué à l'aide de seize recherches dans des LUT et douze opérations de « ou exclusif » sur 32 bits, suivies par quatre opérations de « ou exclusif » sur 32 bits durant l'étape « AddRoundKey ». Cette technique est décrite dans « Efficient Software Implementation of AES on 32-Bit Platforms », Guido Bertoni, Luca Breveglieri, Pasqualina Fragneto, Marco Macchetti and Stefano Marchesin, Cryptographic Hardware and Embedded Systems - CHES 2002, Lecture Notes in Computer Science, 2003, Volume 2523/2003, 129-142, DOI: 10.1007/3-540-36400-5_13. Cependant, cette technique impose l'utilisation de processeurs 32 bits, ce qui est extrêmement contraignant (la plupart des cartes à puce utilisent des processeurs 8-bits et ne sont pas capables d'émuler des calculs en mode 32 bits avec des performances satisfaisantes).

Il a été proposé de combiner les étapes « SubBytes », « ShiftRows », et « MixColumns » en une seule opération de tour dans le cadre d'une approche dite « byte-oriented » (orienté octet), ce qui est décrit notamment sur http://code.google.com/p/byte-oriented-aes/ (juin 2009). Ce projet n'envisage pas de randomisation.

Le document « High Data Rate 8-Bit Crypto Processor », Sheikh Muhammad Farhan, Proceedings of the ISSA 2004 Enabling Tomorrow Conference, 2004, 1er janvier 2004, divulgue un calcul d'AES optimisé pour une plate-forme 8-bit, et notamment une étape qualifiée de « élimination of shift rows transformation ». Les explications qui sont données de cette « élimination » montrent qu'elle ne correspond pas au remplacement des opérations consécutives « shift rows » et « mix columns » par une seule opération, mais que l'exécution de l'opération « shift rows » est en fait simplement transférée du crypto-processeur vers un module « FSM controller » de gestion du crypto-processeur, le crypto-processeur continuant d'effectuer l'opération « mix columns ».

Le document « An AES chip with DPA résistance using hardware-based random order execution », BO YU et al., JOURNAL OF SEMICONDUCTORS, vol. 33 n°6, 1er juin 2012, divulgue un calcul d'AES optimisé pour une plate-forme 8-bit. Ce document divulgue une certaine forme de randomisation de l'algorithme AES.

L'invention vient améliorer la situation.

Un aspect de l'invention concerne un procédé de protection d'un dispositif électronique, lorsque le dispositif électronique met en oeuvre un algorithme cryptographique, contre des attaques par canal auxiliaire, l'algorithme cryptographique opérant sur un tableau d'états, l'algorithme cryptographique étant conçu pour générer, à partir d'un tableau d'états courants, un deuxième tableau d'états dont chaque ligne est obtenue en opérant un décalage (cyclique) sur la ligne correspondante du tableau d'états courants (qui peut également être interprété comme une rotation des éléments de la ligne), puis pour générer, à partir du deuxième tableau d'états, un troisième tableau d'états dont les éléments de chaque colonne résultent d'un mélange des éléments de la colonne correspondante du deuxième tableau d'états, le procédé étant caractérisé en ce qu'il comprend le remplacement des deux générations consécutives précitées respectivement du deuxième et du troisième tableau d'états par une génération sécurisée, à partir du tableau d'états courants, d'un tableau d'états égal au troisième tableau d'états, cette génération sécurisée mélangeant, de façon randomisée, les éléments du tableau d'états courants qui se seraient trouvés sur une même colonne du deuxième tableau d'états si celui-ci avait été généré, afin de produire la colonne correspondante du tableau d'états généré.

Le procédé est avantageux en ce qu'il permet de sécuriser la mise en oeuvre d'algorithmes cryptographiques par des dispositifs électroniques, réduisant le risque d'attaques par canal auxiliaire. Il est notamment avantageux en ce qu'il est utilisable pour protéger des algorithmes cryptographiques comprenant plusieurs tours internes (il permet de protéger plus de deux tours, et même tous les tours).

Ce procédé permet de surcroît d'accélérer et d'alléger l'implémentation logicielle d'un algorithme cryptographique sécurisé par masquage et dont la structure interne est dictée par un aléa (randomisation). Intégrer indirectement l'opération de décalage de lignes à l'opération suivante de mélange de colonnes et modifier cette dernière de façon à ce que son résultat soit placé dans un autre tableau, mais ordonné comme si l'opération de décalage de lignes avait été effectuée est avantageux. Le coût de l'opération de décalage est ainsi nul, ce qui représente en soi une accélération, et permet de plus de randomiser celui-ci de la même manière que l'opération de mélange de colonnes, les deux étant imbriquées.

Ceci est également avantageux par rapport à des solutions qui déporteraient l'exécution du décalage de ligne « shift rows » vers un autre composant, puisque cela évite d'ajouter de la complexité sur un tel autre composant (et évite également d'avoir à sécuriser cet autre composant vis-à-vis des attaques potentielles sur cette opération « shift rows » isolée). On peut ainsi, par exemple, réduire la quantité de silicium requis et la surface du/des composant(s) électronique(s) utilisé(s), réduire les communications entre composants et/ou économiser des ressources (par exemple RAM) sur l'autre composant.

Le procédé est également avantageux en ce qu'il permet de protéger une version plus légère en mémoire de l'AES spécifiée dans le standard concerné (AES Proposal: Rijndael, Document version 2, Date: 03/09/99, précité).

Un aspect de l'invention concerne un programme d'ordinateur comprenant une série d'instructions, qui lorsqu'elle est exécutée par un processeur d'un dispositif électronique, conduit le processeur à mettre en oeuvre un procédé selon un aspect de l'invention.

Un aspect de l'invention concerne un support de stockage non transitoire lisible par ordinateur, le support stockant un programme d'ordinateur selon un aspect de l'invention.

Un aspect de l'invention concerne un dispositif électronique agencé pour mettre en oeuvre un algorithme cryptographique opérant sur un tableau d'états, l'algorithme cryptographique étant conçu pour générer, à partir d'un tableau d'états courants, un deuxième tableau d'états dont chaque ligne est obtenue en opérant un décalage sur la ligne correspondante du tableau d'états courants, puis pour générer, à partir du deuxième tableau d'états, un troisième tableau d'états dont les éléments de chaque colonne résultent d'un mélange des éléments de la colonne correspondante du deuxième tableau d'états, le dispositif électronique comprenant un circuit de protection contre des attaques par canal auxiliaire, le circuit de protection étant agencé pour remplacer les deux générations consécutives précitées respectivement du deuxième et du troisième tableau d'états par une génération sécurisée, à partir du tableau d'états courants, d'un tableau d'états égal au troisième tableau d'états, cette génération sécurisée mélangeant, de façon randomisée, les éléments du tableau d'états courants qui se seraient trouvés sur une même colonne du deuxième tableau d'états si celui-ci avait été généré, afin de produire la colonne correspondante du tableau d'états généré.

D'autres aspects, buts et avantages de l'invention apparaîtront à la lecture de la description de quelques uns de ses modes de réalisation.

L'invention sera également mieux comprise à l'aide des dessins, sur lesquels :

- la figure 1 illustre l'algorithme cryptographique de chiffrement AES ;
- la figure 2 illustre l'opération « ShiftRows » de l'AES ;
- la figure 3 illustre l'opération « MixColumns » de l'AES ;
- la figure 4 illustre une partie de procédé selon un mode de réalisation de l'invention ;
- la figure 5 illustre un dispositif électronique selon un mode de réalisation de l'invention ;
- la figure 6 illustre une partie de procédé optionnel pouvant compléter les différents modes de réalisation de l'invention.

La figure 1 montre de façon schématique la structure connue de l'algorithme cryptographique de chiffrement AES, et en particulier les étapes SHFT_R (étape numéro 3, dénommée « ShiftRows ») et MIX_C (étape numéro 4, dénommée « MixColumns »).

La figure 2 illustre graphiquement l'étape connue SHFT_R, qui transforme un tableau d'états courants MAT1 en un deuxième tableau d'états MAT2. La notion de deuxième tableau d'états est relative au tableau d'états courants, supposé le premier tableau d'états dans le contexte considéré. Il est cependant entendu que le tableau d'états est modifié à de multiples reprises. En particulier, les étapes successives « ShiftRows » et « MixColumns » sont effectuées neuf fois lors d'un chiffrement AES-128 (et jusqu'à treize fois, dans le cas de l'AES-256). Le « deuxième » tableau d'états du dernier tour de l'AES est donc en réalité une nième version de ce tableau d'états (qui a subi de très nombreuses modifications). On observe sur la figure 2 que le deuxième tableau d'états est issu d'un décalage opéré sur le tableau d'états courants, et que les éléments des colonnes du deuxième tableau d'états proviennent de diagonales du tableau d'états courants. Ces diagonales sont la diagonale principale et trois diagonales brisées, une diagonale brisée étant une paire de rangées parallèles à la diagonale principale et totalisant autant d'éléments que la plus petite dimension du tableau.

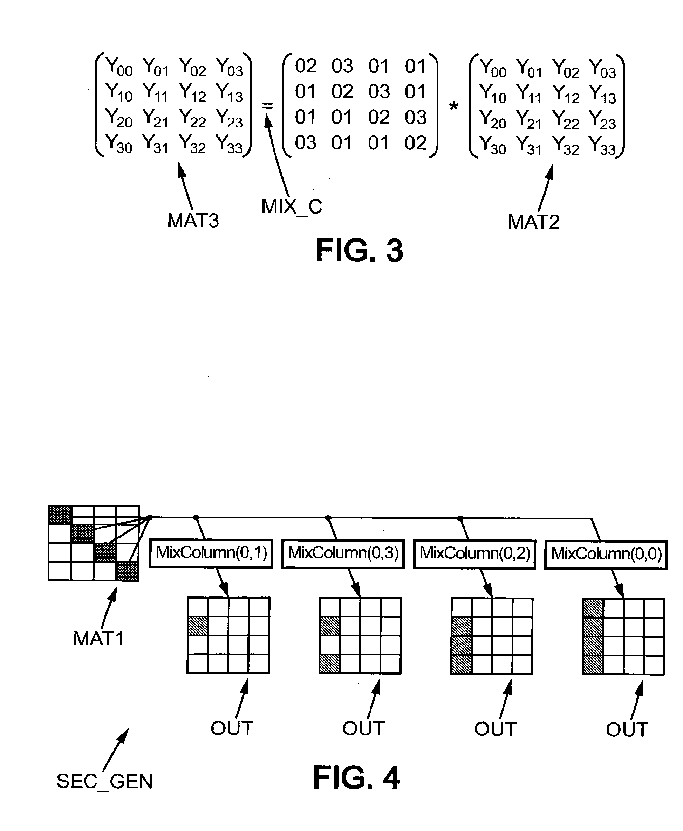

La figure 3 illustre l'opération MIX_C (dénommée « MixColumns »), connue, de l'AES. On observe que le deuxième tableau d'états MAT2 est transformé en un troisième tableau d'états MAT3 par multiplication matricielle.

En réalité, de nombreuses variantes permettent d'atteindre le même résultat.

Il est par exemple possible de considérer les colonnes du tableau d'états comme des polynômes dans $GF(2^8)$ et de les multiplier modulo $x^4+1$ par le polynôme : $a(x) = 03{*}x^3 + 01 {*}x^2 + 01 {*}x + 02$.

La figure 4 illustre une partie de procédé mis en oeuvre par un dispositif électronique selon un mode de réalisation de l'invention. Il s'agit de la partie traitant une des quatre colonnes. Le procédé opère directement sur le tableau d'états courants MAT1, sans que l'opération « ShiftRows » n'ait été effectuée.

Le procédé commence par sélectionner aléatoirement une colonne cible du contenu du tableau d'états (noté « out ») attendu après l'opération « MixColumns » (qui correspond également à la même colonne du tableau d'états après l'opération « ShiftRows »). Dans l'exemple représenté, cette colonne cible se trouve être la première colonne (qui correspond à la diagonale principale du tableau d'états MAT1, représentée sous forme grisée).

Le procédé sélectionne alors aléatoirement un élément de cette colonne (en l'occurrence le deuxième élément (0,1)), et le calcule.

On a ainsi :

$$out(0,1) = 01{*}MAT1(0,0) + 02{*}MAT1(1,1) + 03{*}MAT1(2,2) + 01{*}MAT1(3,3).$$

Le procédé sélectionne ensuite aléatoirement un autre élément de cette colonne (en l'occurrence le quatrième élément (0,3)), et le calcule.

On a ainsi :

$$out(0,3) = 03{*}MAT1(0,0) + 01{*}MAT1(1,1) + 01{*}MAT1(2,2) + 02{*}MAT1(3,3).$$

Le procédé sélectionne ensuite aléatoirement un autre élément de cette colonne (en l'occurrence le troisième élément (0,2)), et le calcule.

On a ainsi :

$$out(0,2) = 01{*}MAT1(0,0) + 01{*}MAT1(1,1) + 02{*}MAT1(2,2) + 03{*}MAT1(3,3).$$

Le procédé sélectionne enfin l'élément restant de cette colonne (en l'occurrence le premier élément (0,0)), et le calcule.

On a ainsi :

$$out(0,0) = 02{*}MAT1(0,0) + 03{*}MAT1(1,1) + 01{*}MAT1(2,2) + 01{*}MAT1(3,3).$$

Ce mode de calcul dans un ordre aléatoire est avantageux par la difficulté qu'il induit de déterminer ce que le dispositif électronique est en train de calculer par des canaux auxiliaires.

Le procédé se poursuit d'une façon non représentée sur la figure 4 par la sélection aléatoire d'une autre colonne et son traitement (similaire au traitement ci-dessus), puis encore par la sélection aléatoire et le traitement d'une autre colonne, et enfin par la sélection et le traitement de la colonne restante. A ce stade, le tableau d'états « out » a été complètement calculé et il est égal au tableau d'états MAT3 qui aurait pu être calculé de façon moins sûre par un algorithme AES conventionnel.

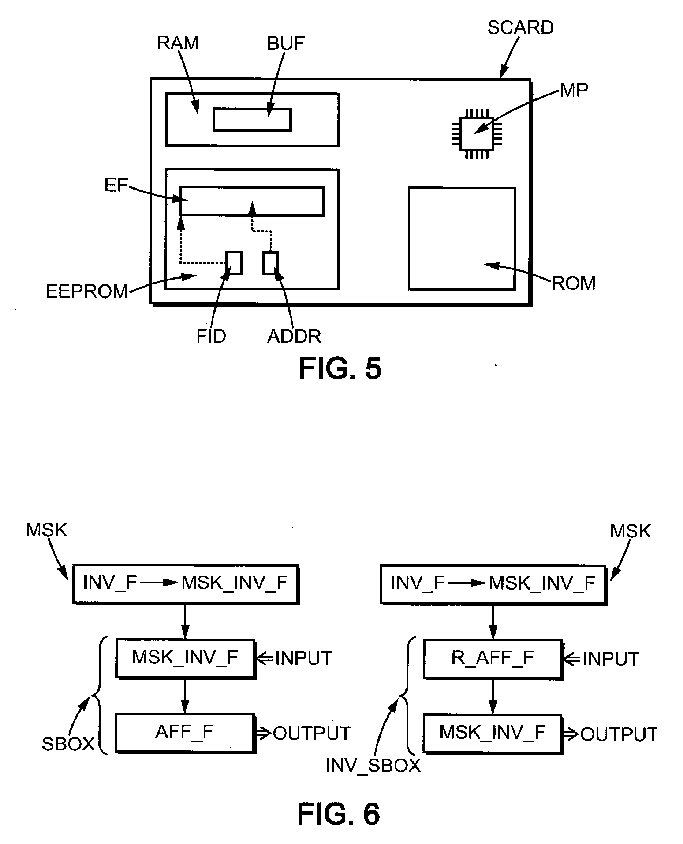

La figure 5 montre une carte à puce SCARD (de l'anglais « smartcard ») selon un mode de réalisation de l'invention. Cette carte à puce est équipée d'un microprocesseur MP, d'une mémoire vive RAM (comprenant une partie mémoire tampon BUF), une mémoire morte ROM, et une mémoire réinscriptible EEPROM (stockant un fichier EF dont un identifiant FID et une adresse ADDR sont également mémorisés). La mémoire morte ROM enregistre un logiciel agencé, lorsqu'il est exécuté par le microprocesseur MP, pour mettre en oeuvre un procédé selon un mode de réalisation. Une carte à puce est un exemple possible de dispositif électronique pour lequel l'invention est particulièrement avantageuse, compte tenu de ses nombreuses applications dans le domaine de la cryptographie (cartes SIM authentifiant un utilisateur de téléphone portable vis-à-vis d'un opérateur, cartes bancaires authentifiant leurs porteurs lors d'une transaction financière, cartes de santé, etc.). Cependant l'invention s'applique à tout autre dispositif électronique, tel qu'un passeport électronique, un visa électronique, un permis de conduire électronique, une clé USB sécurisée, une carte secure MMC, un jeton sécurisé (token), etc. L'invention peut également être mise en oeuvre dans un ordinateur personnel, un serveur, un accélérateur SSL, etc. La majorité des ordinateurs personnels est non sécurisée, en comparaison avec un dispositif sécurisé tel qu'une carte à puce. Ceci rend ces ordinateurs vulnérables à des attaques beaucoup plus simples à mettre en oeuvre que les attaques contre lesquelles l'invention permet de se protéger, telles que des attaques purement logicielles. Ces attaques logicielles (par virus, chevaux de Troie, etc.) peuvent souvent être menées à bien à distance sans nécessiter aucun accès physique. Il pourrait sembler saugrenu de chercher à se protéger contre des attaques complexes et contraignantes de type canaux auxiliaires alors qu'un attaquant situé sur un autre continent pourrait prendre le contrôle de l'ordinateur à distance et extraire des informations critiques de manière bien plus simple et bien moins dangereuse pour lui (pas d'intrusion, pas de vol de dispositif, etc.). Cependant certains ordinateurs personnels (par exemple dans des environnements militaires) sont fortement sécurisés contre les attaques purement logicielles, et dans ce contexte les protéger également contre des attaques par canal auxiliaire est avantageux.

La figure 6 illustre de façon schématique le fonctionnement de procédés selon deux modes de réalisation possibles.

Sur la gauche, un premier procédé commence par masquer (étape MSK), à l'aide d'un aléa, la fonction inverse INV_F de l'AES afin de produire une fonction inverse masquée MSK_INV_F. L'aléa peut être issu d'un générateur pseudo aléatoire du dispositif électronique s'appuyant sur des éléments matériels tels qu'un convertisseur analogique numérique numérisant un bruit analogique mesuré dans le dispositif électronique et lui appliquant un traitement mathématique (par exemple à l'aide d'un cryptoprocesseur du dispositif électronique). Un moyen possible de masquer la fonction inverse est de mettre en oeuvre cette fonction inverse sous forme de table INV_F et de générer une table de fonction inverse masquée MSK_INV_F selon l'algorithme suivant (pour une table à 256 éléments), dans lequel m et w sont des octets aléatoires et le symbole '+' désigne l'opération de « ou exclusif » :

Pour i de 0 à 255 :

$$MSK\_INV\_F[i] = INV\_F[i + m] + w$$

Dans un deuxième temps, le procédé applique une boîte de substitution SBOX masquée à des données d'entrée INPUT, et génère une sortie correspondante OUTPUT. La mise en oeuvre de la boîte de substitution masquée consiste à appliquer la fonction inverse masquée MSK_INV_F aux données d'entrée INPUT, puis à appliquer au résultat de cette inversion masquée la fonction affine AFF_F de l'AES (non masquée). On obtient ainsi une boîte de substitution globalement masquée.

De façon similaire, sur la droite de la figure 6, un deuxième procédé commence par masquer (étape MSK identique à l'étape MSK du procédé précédent) la fonction inverse INV_F de l'AES afin de produire une fonction inverse masquée MSK_INV _F. Dans un deuxième temps, le procédé applique une boîte de substitution inverse INV _SBOX masquée à des données d'entrée INPUT, et génère une sortie correspondante OUTPUT. La mise en oeuvre de la boîte de substitution inverse masquée consiste à appliquer la fonction réciproque R_AFF_F de la fonction affine AFF_F de l'AES (non masquée) aux données d'entrée INPUT, puis à appliquer au résultat de cette fonction la fonction inverse masquée MSK_INV_F. On obtient ainsi une boîte de substitution inverse globalement masquée.

Selon un mode de réalisation, un procédé de protection d'un dispositif électronique SCARD est agencé pour protéger (contre des attaques par canal auxiliaire) le dispositif électronique lorsque ce dispositif électronique met en oeuvre un algorithme cryptographique. Le dispositif électronique peut être notamment une carte à puce, mais également tout autre équipement approprié susceptible de mettre en oeuvre un algorithme cryptographique. L'algorithme cryptographique peut être notamment l'algorithme AES, spécifié dans le document FIPS-197 (« Fédéral Information Processing Standards Publication 197 »), daté du 26 novembre 2001 (publié par le NIST, qui est une agence du Département du Commerce des Etats-Unis d'Amérique). Cependant, il peut également s'agir de toute autre variante de Rijndael (l'AES est une variante de Rijndael). Il existe de nombreuses variantes de l'algorithme Rijndael, selon notamment les valeurs des paramètres Nk (déterminant la longueur de la clé), Nb (déterminant la taille du bloc) et Nr (déterminant le nombre de tours). L'AES ne retient que trois variantes, à savoir la variante AES-128 (Nk=4, Nb=4, Nr=10), la variante AES-192 (Nk=6, Nb=4, Nr=12) et la variante AES-256 (Nk=8, Nb=4, Nr=14), cependant les autres combinaisons de paramètres possibles pour Rijndael sont également envisageables.

Il est plus généralement possible de sécuriser, à l'aide du procédé, la mise en oeuvre de tout algorithme cryptographique opérant sur un tableau d'états, l'algorithme cryptographique étant conçu pour générer (lors d'une étape notée SHFT_R, pour « ShiftRow »), à partir d'un tableau d'états courants MAT1, un deuxième tableau d'états MAT2

dont chaque ligne est obtenue en opérant un décalage sur la ligne correspondante du tableau d'états courants MAT1, puis pour générer (lors d'une étape notée MIX_C, pour « MixColumns »), à partir du deuxième tableau d'états MAT2, un troisième tableau d'états MAT3 dont les éléments de chaque colonne résultent d'un mélange des éléments de la colonne correspondante du deuxième tableau d'états MAT2.

Le tableau d'états est par exemple une matrice de quatre lignes et quatre colonnes, chaque élément étant représenté par un octet.

Le procédé comprend le remplacement des deux générations consécutives précitées (SHFT_R et MIX_C) respectivement du deuxième et du troisième tableau d'états (MAT2 et MAT3) par une génération sécurisée SEC_GEN, à partir du tableau d'états courants MAT1, d'un tableau d'états égal au troisième tableau d'états MAT3. Ainsi, on évite de créer une version intermédiaire du tableau d'états (la version MAT2). Ceci est avantageux notamment car la création de cette version intermédiaire serait susceptible de fuir des informations via un canal auxiliaire. En effet, une écriture en mémoire RAM (ou a fortiori en mémoire EEPROM) peut souvent être repérée plus aisément que par exemple une simple opération de lecture, ou une opération de lecture ou d'écriture dans un registre de processeur. Cette génération sécurisée SEC_GEN mélange (ce qui correspond au terme « mix » dans l'expression « mix columns »), de façon randomisée (comme exposé ci-avant, la randomisation consiste en un traitement dans un ordre aléatoire), les éléments du tableau d'états courants MAT1 qui se seraient trouvés sur une même colonne du deuxième tableau d'états MAT2 si celui-ci avait été généré, afin de produire la colonne correspondante du tableau d'états généré.

Ainsi, le produit ne modifie pas le résultat déterminé par l'algorithme cryptographique, mais le calcule d'une façon différente, plus sécurisée. La randomisation (traitement dans un ordre aléatoire des différents éléments du tableau d'états) accroît également la sécurité.

Le procédé peut être mis en oeuvre à l'aide d'une suite d'instructions constituant un programme d'ordinateur exécuté par un processeur du dispositif électronique. Mais il peut également être mis en oeuvre à l'aide d'un circuit électronique dédié intégré au dispositif électronique, tel qu'un ASIC, un FPGA (ou les variantes PAL, EPLD, PLD, CPLD, PLA, etc.) convenablement configuré (par exemple en VHDL), voire de l'électronique dédiée conçue sur mesure.

Selon un mode de réalisation chaque élément d'un tableau d'états est identifié par un indice. Par exemple, si l'on considère un tableau d'états de 4*4 octets (utilisé notamment dans l'AES), chacun des éléments peut être identifié par un indice (i,j). Chaque élément peut être noté $T_{i,j}$, $T_{i,j}$ désignant l'octet situé sur la $i^{eme}$ ligne (les lignes étant numérotées de i=0 à i=3) et sur la $j^{eme}$ colonne (les colonnes étant numérotées de j=0 à j=3). Il est possible d'utiliser d'autres formes d'indices.

Par exemple il est possible d'utiliser un indice k = i+4*j (ou plus généralement k=i+TL*j où TL désigne la taille d'une ligne en nombre d'éléments). Il est également possible d'utiliser un indice k=j+4*i (ou plus généralement k=j+TC*i où TC désigne la taille d'une colonne en nombre d'éléments). Il est également possible d'utiliser comme indice l'adresse absolue ou relative de l'élément (si l'élément occupe plusieurs adresses, par exemple dans le cas d'un élément sur 16 bits alors que le dispositif électronique utilise un système d'adressage adressant les octets individuellement, on peut alors avoir par exemple un indice de la forme k=2*(i+TL*j)).

On repère ainsi chaque élément du tableau d'états avec un indice à une seule variable k, ou à plusieurs variables (par exemple deux variables i et j).

Le mélange des éléments du tableau d'états courants MAT1 par la génération sécurisée SEC_GEN s'appuie sur une fonction de conversion d'indices prenant en paramètre d'entrée un indice (i,j) d'un élément virtuel du deuxième tableau d'états MAT2 et fournissant en sortie l'indice (ic,jc) de l'élément correspondant dans le tableau d'états courants MAT1. Il est question d'éléments virtuels car le tableau d'états MAT2 n'a pas été généré (n'existe pas). L'élément virtuel est donc un élément qui n'existe pas en tant que tel (dans un tableau d'états MAT2 lui-même inexistant), mais qui serait égal (si le tableau d'états MAT2 avait été généré) à un élément correspondant du tableau d'états MAT1.

Selon un mode de réalisation, le décalage appliqué à une ligne lors de la génération SHFT_R du deuxième tableau d'états MAT2 est un décalage de n éléments, n désignant le numéro de la ligne, la première ligne ayant pour numéro n=0 (par exemple un décalage tel que représenté sur la figure 2). Le tableau d'états MAT2 n'est pas généré, mais son contenu théorique est néanmoins important comme cela a été précédemment rappelé.

Ainsi, si l'on considère par exemple un tableau d'états de 4*4 octets (utilisé notamment dans l'AES), dont les éléments sont notés $T_{i,j}$, $T_{i,j}$ désignant l'octet situé sur la $i^{eme}$ ligne (les lignes étant numérotées de i=0 à i=3) et sur la $j^{eme}$ colonne (les colonnes étant numérotées de j=0 à j=3), alors la génération sécurisée SEC_GEN mélange les éléments de la diagonale $T_{k,k}$ (k=0 à 3) du tableau d'états courants MAT1 en lieu et place de la première colonne (éléments $T_{k,o}$ pour k=0 à 3) du deuxième tableau d'états MAT2, car si ce deuxième tableau d'états MAT2 avait été généré, sa première colonne aurait été composée des éléments de la diagonale du tableau d'états courants MAT1.

Plus généralement, la génération sécurisée SEC_GEN mélange les éléments $T_{k,(k+n)\ mod\ 4}$ (k=0 à 3 et n constant et compris entre 0 et 3, mod désignant l'opération modulo 4, à savoir le reste de la division entière par 4) du tableau d'états courants MAT1 en lieu et place de la $n^{eme}$ colonne (éléments $T_{k,n}$ pour k=0 à 3 et n constant et compris entre 0 et 3) du deuxième tableau d'états MAT2 (s'il avait été généré), car si ce deuxième tableau d'états MAT2 avait été généré, sa $n^{eme}$ colonne aurait été composée des éléments $T_{k,(k+n)mod\ 4}$ du tableau d'états courants MAT1. Ceci correspond à l'opération « ShiftRows » de l'AES.

Bien entendu, d'autres types de décalages sont possibles, notamment le décalage correspondant à l'opération « InvShiftRows » de l'AES (utilisé lors d'un déchiffrement). Il serait également concevable qu'un algorithme cryptographique définisse une bijection quelconque phi de [0 ;NL-1 dans [0 ;NL-1] (NL désignant le nombre de lignes du tableau d'états) et que le décalage appliqué à la ligne numéro n (n compris entre 0 et NL-1) soit un décalage de phi(n) éléments.

Selon un mode de réalisation, le mélange des éléments d'une colonne du deuxième tableau d'états MAT2 afin d'obtenir un élément du troisième tableau d'états MAT3 lors de sa génération MIX_C est une combinaison linéaire de ces éléments. Les scalaires utilisés pour la combinaison linéaire peuvent dépendre de la ligne sur laquelle se trouve l'élément du troisième tableau d'états MAT3.

Par exemple, le mélange peut être le résultat de l'opération « MixColumns » de l'AES, ou encore de l'opération « InvMixColumns » (dans le cas d'une opération de déchiffrement).

Les opérations « MixColumns » et « InvMixColumns » reviennent à multiplier le tableau d'états MAT2 par une matrice contenant les scalaires à utiliser pour les combinaisons linéaires, comme illustré dans les deux équations ci-dessous.

$$MAT3 = MixColumns(MAT2) = \begin{pmatrix} 02 & 03 & 01 & 01 \\ 01 & 02 & 03 & 01 \\ 01 & 01 & 02 & 03 \\ 03 & 01 & 01 & 02 \end{pmatrix} * MAT2$$

$$MAT3 = InvMixColumns(MAT2) = \begin{pmatrix} 0e & 0b & 0d & 09 \\ 09 & 0e & 0b & 0d \\ 0d & 09 & 0e & 0b \\ 0b & 0d & 09 & 0e \end{pmatrix} * MAT2$$

Bien entendu, d'autres combinaisons linéaires sont envisageables (les matrices ci-dessus pourraient utiliser des coefficients différents).

Le procédé n'effectue pas les calculs de la manière indiquée dans les deux équations ci-dessus (qui correspond au fonctionnement de l'algorithme cryptographique non sécurisé) puisque cela ferait intervenir le deuxième tableau d'états MAT2. Comme indiqué précédemment, le procédé opère directement sur le tableau d'états courants MAT1.

Par exemple, on note « IndConv » une fonction de conversion d'indices selon un mode de réalisation, avec IndConv((i,j)) = (ic,jc) tel que MAT2(i,j) = MAT1 (ic,jc) pour tout (i,j) dans [0;NL]*[0;NC] (NL et NC désignant respectivement le nombre de lignes et le nombre de colonnes du tableau d'états). Cette fonction « IndConv » peut être « romée » c'est-à-dire stockée dans une mémoire de type ROM, généralement moins sensible aux attaques par canaux auxiliaires que d'autres mémoires (telles que les mémoires RAM, EEPROM, ou Flash, ou plus généralement toute mémoire réinscriptible, qui serait nécessaire pour enregistrer le deuxième tableau d'états MAT2).

Le procédé peut alors remplacer les deux générations consécutives de tableaux d'états MAT2 et MAT3 selon l'algorithme conventionnel, par exemple selon un algorithme de chiffrement AES représenté par le pseudo code suivant :

```
MAT2 = ShiftRows(MAT1) // génération de MAT2 à partir de MAT1
INIT(MAT3) // initialise MAT3 à zéro
for i=0...3, for j=0...3, for k=0...3
    MAT3(i,j) += COEFF(i,k)*MAT2(k,j)
// COEFF est la matrice de coefficients scalaires de MixColumns
```

par un algorithme modifié dont le pseudo code est le suivant :

```
INIT(out) // initialise le tableau de résultat attendu, «out», à zéro
RAND(bl,bc,b) // crée aléatoirement trois bijections de [0 ;3] dans [0 ;3]
for i=0...3, for j=0...3, for k=0...3
    out(bl(i),(bc(j)) += COEFF(bl(i),b(k))*MAT1(IndConv(b(k),bc(j)))
```

Le traitement dans un ordre aléatoire des éléments du tableau d'états (grâce aux bijections bl, bc et bm sélectionnées aléatoirement) permet de sécuriser encore davantage l'algorithme cryptographique en rendant les observations par canaux auxiliaires encore plus difficiles à mettre en oeuvre. Ce traitement aléatoire est évidemment possible sur des tableaux d'états de tailles différentes de 4*4.

Il est également possible d'utiliser un algorithme modifié dont le pseudo code est le suivant :

```
INIT(out) // initialise le tableau de résultat attendu, « out », à zéro
RAND(bsq) // crée aléatoirement une bijection de [0 ;3]² dans [0 ;3]²
RAND(b) // crée aléatoirement une bijection de [0 ;3] dans [0 ;3]
for i=0…3, for j=0…3, for k=0…3

   out(bsq(i,j)) += COEFF(1(bsq(i,j)),b(k))*MAT1(IndConv(b(k),c(bsq(i,j
// 1 (pour ligne) est définie comme la fonction 1 : (i,j) -> i
// c (pour colonne) est définie comme la fonction c : (i,j) -> j
```

Cette version alternative randomise encore plus le calcul de l'AES car il fait disparaître le traitement colonne par colonne de la version précédente (qui traite les éléments aléatoirement mais colonne par colonne, quand bien même les colonnes sont traitées dans un ordre aléatoire). Ce traitement aléatoire est évidemment possible sur des tableaux d'états de tailles différentes de 4*4. Cette version alternative protège contre des attaques plus compliquées (non difficiles à mettre en pratique)

Ce procédé (dans ses diverses variantes exposées précédemment) permet de surcroît d'accélérer et d'alléger l'implémentation logicielle d'un algorithme cryptographique sécurisé par masquage (il est ainsi possible d'opérer sur des données masquées plutôt que sur des données en clair).

Selon un mode de réalisation, un programme d'ordinateur comprend une série d'instructions, qui lorsqu'elle est exécutée par un processeur MP d'un dispositif électronique SCARD, conduit le processeur MP à mettre en oeuvre un procédé selon un mode de réalisation.

Le dispositif électronique peut ainsi être une carte à puce SCARD, comprenant un microcontrôleur, le microcontrôleur comprenant un processeur MP relié à d'autres composants tels qu'une ou plusieurs mémoires (RAM, EEPROM, Flash, ROM, etc.), des composants d'entrées-sorties, etc. Le programme d'ordinateur peut être écrit en langage assembleur, ou éventuellement en langage de haut niveau (tel que le langage C par exemple) compilé et dont le code assembleur résultant est éventuellement retouché à des fins d'optimisation et/ou de sécurisation.

Selon un mode de réalisation, un support de stockage non transitoire lisible par ordinateur stocke un programme d'ordinateur selon un mode de réalisation. Ce support de stockage peut être notamment une mémoire (par exemple EEPROM, Flash ou ROM), éventuellement intégrée à un système tel qu'une clé USB, une carte à puce, une carte mémoire, etc.

Selon un mode de réalisation, un dispositif électronique SCARD est agencé pour mettre en oeuvre un algorithme cryptographique. L'algorithme cryptographique peut être par exemple l'AES, plus généralement Rijndael, ou encore tout algorithme cryptographique opérant sur un tableau d'états et conçu pour générer (lors d'une étape SHFT_R), à partir d'un tableau d'états courants MAT1, un deuxième tableau d'états MAT2 dont chaque ligne est obtenue en opérant un décalage sur la ligne correspondante du tableau d'états courants MAT1, puis pour générer (lors d'une étape MIX_C), à partir du deuxième tableau d'états MAT2, un troisième tableau d'états MAT3 dont les éléments de chaque colonne résultent d'un mélange des éléments de la colonne correspondante du deuxième tableau d'états MAT2. D'autres algorithmes cryptographiques pouvant être protégés selon un mode de réalisation sont par exemple les algorithmes de chiffrement LED et KLEIN, qui sont basés sur la structure de l'AES (structure dite de SPN, de l'anglais Substitution-Permutation Network, dans laquelle chaque tour est divisé en opérations SubBytes, ShiftRows, MixColumns et AddRoundKey comme dans l'AES, mais dans laquelle les matrices et Sbox ne sont pas les mêmes). L'algorithme LED est décrit dans l'article « The LED Block Cipher », de Jian Guo, Thomas Peyrin, Axel Poschmann, et Matt Robshaw, publié dans B. Preneel and T. Takagi (Eds.): CHES 2011, LNCS 6917, pp. 326-341, © Springer-Verlag Berlin Heidelberg 2011. L'algorithme KLEIN est décrit dans l'article « KLEIN: A New Family of Lightweight Block Ciphers » de Zheng Gong, Svetla Nikova et Yee-Wei Law, présenté à RFIDSec 2011. Le dispositif électronique SCARD comprend un circuit de protection MP contre des attaques par canal auxiliaire. Le circuit de protection MP est agencé pour remplacer les deux générations consécutives précitées (SHFT_R et MIX_C) respectivement du deuxième et du troisième tableau d'états (MAT2 et MAT3) par une génération sécurisée SEC_GEN, à partir du tableau d'états courants MAT1, d'un tableau d'états égal au troisième tableau d'états MAT3. Cette génération sécurisée SEC_GEN mélange, de façon randomisée, les éléments du tableau d'états courants MAT1 qui se seraient trouvés sur une même colonne du deuxième tableau d'états MAT2 (si celui-ci avait été généré) afin de produire la colonne correspondante du tableau d'états généré.

Le circuit de protection MP peut être un processeur du dispositif électronique utilisateur associé à une mémoire stockant un logiciel adapté pour la mise en oeuvre du procédé par le processeur. Mais il peut également s'agir d'un circuit électronique dédié intégré au dispositif électronique, tel qu'un ASIC, un FPGA (ou les variantes PAL, EPLD, PLD, CPLD, PLA, etc.) convenablement configuré (par exemple en VHDL), voire de l'électronique dédiée conçue sur mesure. Il est ainsi possible de sécuriser une mise en oeuvre matérielle d'un algorithme cryptographique.

Selon un mode de réalisation, chaque élément d'un tableau d'états étant identifié par un indice, le circuit de protection MP est agencé pour mélanger des éléments du tableau d'états courants MAT1 par la génération sécurisée SEC_GEN en s'appuyant sur une fonction de conversion d'indices prenant en paramètre d'entrée un indice (i,j) d'un élément virtuel du deuxième tableau d'états MAT2 et fournissant en sortie l'indice (ic,jc) de l'élément correspondant dans le tableau d'états courants MAT1. Les variantes décrites pour le procédé se transposent au dispositif électronique.

Selon un mode de réalisation, le décalage appliqué à une ligne lors de la génération SHFT_R du deuxième tableau d'états MAT2 est un décalage de n éléments, n désignant le numéro de la ligne, la première ligne ayant pour numéro n=0. Les variantes décrites pour le procédé se transposent au dispositif électronique.

Selon un mode de réalisation, le mélange des éléments d'une colonne du deuxième tableau d'états MAT2 afin d'obtenir un élément du troisième tableau d'états MAT3 lors de sa génération MIX_C est une combinaison linéaire de ces éléments. Les variantes décrites pour le procédé se transposent au dispositif électronique.

Selon un mode de réalisation, les scalaires utilisés pour la combinaison linéaire dépendent de la ligne sur laquelle se trouve l'élément du troisième tableau d'états. Les variantes décrites pour le procédé se transposent au dispositif électronique.

Ainsi qu'il sera exposé ci-après, les modes de réalisation qui précèdent peuvent être complétés par un procédé d'optimisation de la mémoire lors de l'exécution de l'algorithme cryptographique.

Selon un mode de réalisation, un procédé optimise l'utilisation de la mémoire MEM (qui est une mémoire réinscriptible) d'un dispositif électronique SCARD (par exemple une carte à puce), lorsque le dispositif électronique met en oeuvre un algorithme cryptographique en le protégeant contre des attaques physiques. La protection résulte notamment d'un masquage d'une boîte de substitution SBOX et d'une boîte de substitution inverse INV_SBOX.

Selon un mode de réalisation, l'algorithme cryptographique est l'AES. Cependant, l'algorithme cryptographique peut être plus généralement tout algorithme Rijndael autre que les algorithmes Rijndael retenus pour l'AES, et même tout algorithme cryptographique mettant en oeuvre une boîte de substitution SBOX comprenant une fonction inverse INV_F suivie d'une fonction affine AFF_F et une boîte de substitution inverse INV_SBOX comprenant la fonction réciproque R_AFF_F de la fonction affine AFF_F suivie de la fonction inverse INV_F.

Dans le cas de l'AES, la fonction inverse est l'inverse multiplicatif dans le groupe fini $GF(2^8)$ défini dans l'AES, et la fonction affine est la fonction affine de l'AES, à savoir la fonction qui à l'octet B associe l'octet B' tel que :

$$\begin{bmatrix} b'_0 \\ b'_1 \\ b'_2 \\ b'_3 \\ b'_4 \\ b'_5 \\ b'_6 \\ b'_7 \end{bmatrix} = \begin{bmatrix} 1 & 0 & 0 & 0 & 1 & 1 & 1 & 1 \\ 1 & 1 & 0 & 0 & 0 & 1 & 1 & 1 \\ 1 & 1 & 1 & 0 & 0 & 0 & 1 & 1 \\ 1 & 1 & 1 & 1 & 0 & 0 & 0 & 1 \\ 1 & 1 & 1 & 1 & 1 & 0 & 0 & 0 \\ 0 & 1 & 1 & 1 & 1 & 1 & 0 & 0 \\ 0 & 0 & 1 & 1 & 1 & 1 & 1 & 0 \\ 0 & 0 & 0 & 1 & 1 & 1 & 1 & 1 \end{bmatrix} \begin{bmatrix} b_0 \\ b_1 \\ b_2 \\ b_3 \\ b_4 \\ b_5 \\ b_6 \\ b_7 \end{bmatrix} + \begin{bmatrix} 1 \\ 1 \\ 0 \\ 0 \\ 0 \\ 1 \\ 1 \\ 0 \end{bmatrix}$$

Le procédé génère une fonction inverse masquée MSK_INV_F en masquant la fonction inverse INV_F (ce qui permet de sécuriser aussi bien la boîte de substitution que la boîte de substitution inverse). Selon un mode de réalisation, le procédé ne masque ni la fonction affine AFF_F, ni la fonction réciproque R_AFF_F de la fonction affine AFF_F.

La fonction inverse INV_F masquée ne peut être stockée en mémoire non réinscriptible (telle que de la ROM) puisque par définition elle est définie de manière aléatoire lors de l'utilisation du procédé. Elle est donc générée (à partir de la fonction inverse INV_F) puis stockée dans la mémoire MEM, qui est une mémoire réinscriptible.

Selon un mode de réalisation, la fonction inverse INV_F, la fonction affine AFF_F et la fonction réciproque R_AFF_F de la fonction affine AFF_F sont, quant à elles, enregistrées dans une mémoire du dispositif électronique autre que sa mémoire MEM. Par exemple, elles sont enregistrées en mémoire non réinscriptible (par exemple en mémoire ROM). En effet, selon un mode de réalisation, ces fonctions sont constantes et peuvent donc être définies lors de la fabrication (une fois pour toutes, en ROM). Elles peuvent également être enregistrées dans une mémoire réinscriptible non volatile (telle qu'une mémoire Flash ou EEPROM par exemple) autre que la mémoire MEM. Elles peuvent alors être enregistrées lors d'une configuration (et éventuellement d'une reconfiguration) du dispositif électronique. Il est en effet de plus en plus courant d'utiliser pour le système d'exploitation et les données constantes de certains dispositifs électroniques (tels que les cartes à puce) non plus une mémoire ROM, mais une mémoire réinscriptible non volatile (souvent une mémoire Flash) afin d'augmenter la flexibilité de la fabrication du dispositif électronique (il n'est pas nécessaire de faire masquer un composant ROM chez un fondeur à chaque fois que l'on modifie un élément qui est situé en ROM et n'est pas modifiable par softmask).

Le procédé peut ainsi utiliser la fonction affine AFF_F et la fonction réciproque R_AFF_F de la fonction affine AFF_F (lors de la mise en oeuvre d'une boîte de substitution ou d'une boîte de substitution inverse) sans consommer de mémoire MEM supplémentaire, ou le cas échéant en consommant une quantité de mémoire MEM marginale par rapport à l'optimisation mémoire obtenue. Cette éventuelle quantité de mémoire marginale « perdue » peut être liée par exemple à l'appel d'une fonction (AFF_F ou R_AFF_F) qui peut, par exemple, selon sa mise en oeuvre, entraîner l'enregistrement dans une pile de la mémoire MEM de certaines informations (par exemple deux octets codant l'adresse de retour à utiliser pour poursuivre l'exécution une fois AFF_F ou R_AFF_F exécutée, etc.). L'équivalent de ces informations n'aurait pas nécessairement été requis (en tant qu'enregistrement dans la mémoire MEM) dans une implémentation de l'état de l'art masquant la totalité de la boîte de substitution sous forme de table. Mais en tout état de cause, les quelques octets éventuellement perdus (par exemple deux octets dans l'exemple ci-dessus) sont négligeables par rapport aux 160 voire 256 octets de mémoire MEM économisés grâce au procédé pour un déchiffrement en AES-128 par rapport aux procédés sécurisés de déchiffrement connus.

Les données manipulées par la fonction affine AFF_F (et par la fonction affine réciproque R_AFF_F) sont de préférence masquées. Il n'est pas pour autant nécessaire de modifier la fonction affine ni la fonction affine réciproque pourtant initialement conçues pour des données non masquées. En effet, ces fonctions sont linéaires. Il est donc possible de déterminer, à partir du résultat de la fonction affine (respectivement de la fonction affine réciproque) appliquée à une donnée masquée et de la valeur du masque, le résultat de la fonction affine (respectivement de la fonction affine réciproque) appliquée à la donnée non masquée. En effet, pour une fonction linéaire L, une donnée x et un masque m, on a L(x+m)=L(x)+L(m) et donc L(x)=L(x+m)+L(m) (l'opération '+' désignant le « ou exclusif »).

Selon un mode de réalisation, la mémoire MEM est une mémoire volatile, telle qu'une RAM, ou plus précisément une SRAM, une DRAM, une MRAM, une DDRAM, une SDRAM, une RDRAM, une DDR SDRAM, une DDR2 SDRAM, une DDR3 SDRAM, une XDR DRAM, etc. La mémoire volatile du dispositif électronique est souvent la mémoire la plus critique car peu disponible (il y en a beaucoup moins que de mémoire non volatile). Par exemple il n'y a souvent que quelques centaines ou milliers d'octets de RAM contre plusieurs dizaines de milliers d'octets d'EEPROM dans une carte à puce. De même il n'y a souvent que quelques gigaoctets de RAM dans un serveur contre des téraoctets dans un disque dur de serveur. La mémoire RAM est généralement très rapide aussi bien en lecture qu'en écriture, mais nécessite une alimentation électrique permanente, l'interruption de l'alimentation conduisant à une perte des données enregistrées.

Selon un autre mode de réalisation, la mémoire MEM comprend, aux fins de la mise en oeuvre de l'algorithme cryptographique, une mémoire non volatile réinscriptible (telle qu'une mémoire EEPROM ou Flash) pour le stockage d'informations temporaires telles que la clé étendue, ou telles que la fonction inverse masquée. Cependant l'écriture dans de telles mémoires est beaucoup plus complexe et lente que l'écriture en mémoire volatile de type RAM. Ceci conduit à des performances substantiellement réduites en termes de vitesse d'exécution. C'est également susceptible de donner lieu plus facilement à des attaques par canaux auxiliaires. De plus, le nombre d'écritures dans une mémoire non volatile réinscriptible est généralement limité. Par exemple, le fonctionnement de certaines mémoires EEPROM n'est garanti que pour 100000 écritures. Ce nombre d'écritures (100000) pourrait être atteint pour certaines applications, imposant la non utilisation des zones ayant atteint le seuil d'utilisation, qui se trouveraient ainsi perdues. Ceci accroîtrait d'autant la consommation de mémoire non volatile. Selon un mode de réalisation, l'utilisation d'une mémoire MEM non volatile complète donc l'utilisation d'une RAM comprise dans la mémoire MEM, RAM qui peut s'avérer être de taille insuffisante (en fonction des applications en cours d'exécution, etc.). La mémoire MEM peut ainsi combiner une mémoire RAM et (pour le cas où la RAM serait pleine) de la mémoire non volatile (par exemple EEPROM ou Flash). A cette fin, le procédé peut utiliser par exemple une technique similaire aux techniques connues dites SWAP entre la mémoire vive et le disque dur d'un ordinateur personnel conventionnel (une page de mémoire vive peu utilisée étant recopiée temporairement sur le disque dur pour libérer cette page). Selon le cas, il peut être possible, au lieu de réaliser un SWAP, d'utiliser simplement la mémoire non volatile comme une extension (plus lente et plus contraignante) de la mémoire volatile. Selon un mode de réalisation, la mémoire non volatile de la mémoire MEM peut être une mémoire magnétique (par exemple un disque dur) et peut alors mettre en oeuvre une technique de SWAP conventionnelle. Selon un mode de réalisation, la mémoire MEM comprend un composant de mémoire non volatile physique. Selon un mode de réalisation, la mémoire MEM comprend une mémoire non volatile logique qui constitue un sous ensemble logique d'une mémoire non volatile physique donnée. Par exemple, une puce mémoire EEPROM de 64Ko du dispositif électronique peut être divisée en trois parties. Une première partie de 4Ko peut être allouée à la mémoire MEM. Une deuxième partie de 16Ko peut être allouée à des softmasks (correctifs de bugs éventuels apportés à un système d'exploitation stocké en mémoire ROM, désactivation de certaines fonctions du système d'exploitation, ou fonctionnalités supplémentaires pour ce système d'exploitation). Une troisième partie de 44Ko (la partie principale) peut être allouée à une fonction de mémoire de stockage utilisateur du dispositif électronique (équivalent d'un disque dur sur un ordinateur conventionnel) dans lequel il est possible par exemple de créer des répertoires et sous répertoires (par exemple selon la norme ISO-7816-4), ou encore d'enregistrer des applets Javacard, ou des fichiers de données. Les tailles des trois parties peuvent évidemment être quelconques.

Selon un mode de réalisation, le procédé comprend une phase d'expansion de clé utilisant la boîte de substitution SBOX. La phase d'expansion de clé est mise en oeuvre au fur et à mesure d'un chiffrement ou d'un déchiffrement (chiffrement ou déchiffrement effectué à l'aide de la mise en oeuvre de l'algorithme cryptographique). Ceci maximise l'optimisation résultant du masquage de la fonction inverse (à l'exclusion des fonctions affine et réciproque de la fonction affine, qui ne sont pas masquées) en particulier dans le cas où le procédé met en oeuvre une opération de déchiffrement.

Une comparaison entre deux techniques connues et un procédé selon une mise en oeuvre particulière du mode de réalisation qui vient d'être décrit est représentée sur le tableau suivant :

|  | Mémoire occupée (chiffrement) | Mémoire occupée (déchiffrement) | Nombre de masquages |
|---|---|---|---|
| Expansion masquée complète (séparée) | 432 octets | 432 octets | 1 |
| Expansion masquée progressive (parallèle) | 272 octets | 528 octets | 2 |
| Mode de réalisation (expansion masquée progressive, parallèle) | 272 octets | 272 octets | 1 |

La première technique connue commence par procéder à une expansion complète (ce qui requiert 176 octets) puis réalise un chiffrement complet à l'aide d'une boîte de substitution masquée (256 octets) soit un total de 176+256=432 octets. La première technique permet également un déchiffrement dans lequel on commence par procéder à une expansion complète (ce qui requiert 176 octets) puis réalise un déchiffrement complet à l'aide d'une boîte de substitution inverse masquée (256 octets) soit un total de 176+256=432 octets.

La deuxième technique connue effectue en parallèle une expansion de la clé et un chiffrement. A chaque itération, l'expansion requiert 16 octets (pour les 16 octets parmi 176 que l'on est en train de générer), plus 256 octets pour la boîte de substitution masquée soit un total de 16+256=272 octets. En parallèle, la deuxième technique effectue un chiffrement sur la base des 16 octets de clé qui viennent d'être générés, ce qui requiert 256 octets pour la boîte de substitution chiffrée (cependant ces 256 octets étaient déjà alloués donc cela ne change pas les besoins en mémoire). La deuxième technique connue permet également d'effectuer en parallèle une expansion de la clé et un déchiffrement. A chaque itération, l'expansion requiert 16 octets (pour les 16 octets parmi 176 que l'on est en train de générer), plus 256 octets pour la boîte de substitution masquée soit un total de 16+256=272 octets. En parallèle, la deuxième technique effectue un déchiffrement sur la base des 16 octets de clé qui viennent d'être générés, ce qui requiert 256 octets pour la boîte de substitution inverse chiffrée. Ces 256 octets s'ajoutent aux 272 octets requis pour l'expansion, ce qui implique un besoin de mémoire de 272+256 = 528 octets.

Enfin, la mise en oeuvre particulière du mode de réalisation précité consiste à l'appliquer à l'AES-128. On opère ainsi une expansion masquée progressive, et en parallèle un chiffrement (ou un déchiffrement) à l'aide d'une boîte de substitution (ou d'une boîte de substitution inverse) masquée grâce au masquage de la fonction inverse. Ceci ne nécessite que 272 octets.

Selon un mode de réalisation, la fonction inverse masquée MSK_INV_F, la fonction affine AFF_F et la fonction réciproque R_AFF_F de la fonction affine AFF_F sont mises en oeuvre sous forme de tables. Selon un mode de réalisation, ces trois fonctions s'appliquent à un octet et renvoient un octet. Il peut s'agir par exemple de tables de 256 octets chacune, dont le premier octet contient le résultat de la fonction considérée appliquée à l'octet 00, le deuxième octet le résultat de la fonction considérée appliquée à l'octet 01, et ainsi de suite jusqu'au 256ème octet, contenant le résultat de la fonction considérée appliquée à l'octet FF (255 en hexadécimal). Selon un mode de réalisation, le procédé est mis en oeuvre sous forme d'un logiciel stocké ailleurs que dans la mémoire MEM (par exemple dans une mémoire non volatile telle qu'une EEPROM ou une Flash, voire une mémoire non réinscriptible, tel qu'une ROM). Le procédé peut prévoir des adresses fixes pour les trois tables (ou pour certaines d'entre elles seulement). Par exemple, le procédé peut prévoir deux adresses prédéterminées en ROM (ou dans une EEPROM ou Flash autre que celle éventuellement comprise dans la mémoire MEM) pour les tables représentant la fonction affine AFF_F et la fonction réciproque R_AFF_F de la fonction affine AFF_F, et une adresse prédéterminée dans la mémoire MEM pour stocker la table correspondant à la fonction inverse masquée MSK_INV_F. Ceci économise la mémoire MEM qui serait éventuellement nécessaire pour stocker la valeur de ces adresses. De plus le recours à une table constitue une possibilité permettant de s'affranchir d'un appel de fonction. Le logiciel mettant en oeuvre le procédé peut par exemple lire le résultat de la fonction inverse masquée appliquée à un octet quelconque en lisant directement la mémoire MEM à l'adresse prédéfinie de la table représentant cette fonction inverse masquée à laquelle on ajoute la valeur de l'octet. Par exemple, si la table est stockée à l'adresse $12F0, le procédé peut obtenir l'inverse masqué de l'octet ayant pour valeur B7 en lisant le contenu de l'adresse $13A7.

Selon un mode de réalisation, un procédé met en oeuvre plusieurs procédés de chiffrement ou de déchiffrement de données dans le cadre d'une même session à l'aide d'un procédé selon l'un des modes de réalisations précédents.

La session peut correspondre à l'intervalle qui sépare la mise sous tension et la mise hors tension du dispositif électronique (par exemple introduction d'une carte à puce dans un lecteur, transaction, puis retrait de la carte à puce). La session peut également être une session logique, par exemple une session consécutive à la commande PKCS#11 C_OpenSession() qui permet d'ouvrir une session cryptographique avec un dispositif électronique compatible PKCS#11 (qu'il s'agisse d'une carte à puce ou d'un ordinateur plus important, par exemple un serveur ou un HSM, de l'anglais « Hardware Security Module »).

Les opérations de chiffrement et de déchiffrement peuvent être mises en oeuvre dans un environnement multitâche. Il peut s'agir d'un multitâche coopératif (« faux multitâche ») ou d'un multitâche préemptif (« vrai multitâche »). Dans un système multitâche coopératif, un dispositif électronique met à disposition différentes fonctions (en l'espèce des fonctions cryptographiques), et l'appel à plusieurs fonctions est possible en parallèle si les différentes fonctions rendent la main. Dans une multitâche préemptif, un système d'exploitation (plutôt que la fonction elle-même) alloue des portions de temps disponible du processeur (voir des processeurs distincts, dans le cas d'un dispositif électronique multiprocesseur) à chaque fonction (tâche).

Certains dispositifs électroniques, bien que disposant d'une grande quantité de mémoire MEM (par exemple une mémoire RAM importante), peuvent se trouver limités en raison du grand nombre de calculs parallèles mettant en oeuvre l'algorithme cryptographique. Cela peut être le cas par exemple d'un HSM, ou encore d'un accélérateur TLS/SSL. Bien qu'en pareil cas il soit envisageable de ne masquer la fonction inverse qu'une fois pour toutes les instances en cours, il peut s'avérer préférable du point de vue de la sécurité d'utiliser un masquage différent pour chaque instance, le procédé étant alors avantageux par l'économie mémoire qu'il confère.

Selon un mode de réalisation, un dispositif électronique SCARD comprend une mémoire MEM et un circuit MP d'optimisation de mémoire. Le circuit MP est agencé, lorsque le dispositif électronique SCARD met en oeuvre un algorithme cryptographique en le protégeant contre des attaques physiques par masquage d'une boîte de substitution SBOX et d'une boîte de substitution inverse INV_SBOX (la boîte de substitution SBOX comprenant une fonction inverse INV_F suivie d'une fonction affine AFF_F, la boîte de substitution inverse INV_SBOX comprenant la fonction réciproque R_AFF_F de la fonction affine AFF_F suivie de la fonction inverse INV_F), pour générer une fonction inverse masquée MSK_INV_F par masquage de la fonction inverse INV_F.

Le circuit de protection MP peut être un processeur du dispositif électronique utilisateur associé à une mémoire non volatile stockant un logiciel adapté pour la mise en oeuvre du procédé par le processeur. Mais il peut également s'agir d'un circuit électronique dédié intégré au dispositif électronique, tel qu'un ASIC, un FPGA (ou les variantes PAL, EPLD, PLD, CPLD, PLA, etc.) convenablement configuré (par exemple en VHDL), voire de l'électronique dédiée conçue sur mesure. Il est ainsi possible de sécuriser une mise en oeuvre matérielle d'un algorithme cryptographique.

Selon un mode de réalisation, le dispositif électronique est agencé pour mettre en oeuvre une phase d'expansion de clé (par exemple par le circuit MP), utilisant la boîte de substitution SBOX, au fur et à mesure de la mise en oeuvre d'un chiffrement ou d'un déchiffrement à l'aide de l'algorithme cryptographique.

Selon un mode de réalisation, le dispositif électronique est agencé pour mettre en oeuvre (par exemple par le circuit MP) la fonction inverse masquée MSK_INV_F, la fonction affine AFF_F et la fonction réciproque R_AFF_F de la fonction affine AFF_F sous forme de tables.

Selon un mode de réalisation, le dispositif électronique est agencé pour mettre en oeuvre (par exemple par le circuit MP) plusieurs procédés de chiffrement ou de déchiffrement de données dans le cadre d'une même session en minimisant la consommation de mémoire MEM (grâce à la mise en oeuvre d'un procédé selon l'invention).

Bien entendu, la présente invention ne se limite pas aux formes de réalisation décrites ci-avant à titre d'exemples ; elle s'étend à d'autres variantes.

Ainsi, il a été décrit ci-avant un procédé pour sécuriser une étape de chiffrement AES, mais il est possible de sécuriser de la même façon une étape de déchiffrement AES. De plus, certains modes de réalisation décrits se rapportent à l'algorithme AES, mais l'invention s'applique à d'autres sortes d'algorithmes cryptographiques.

De plus, le procédé selon l'invention n'est pas exclusif de l'utilisation d'autres procédés. Par exemple il est possible de combiner le procédé selon l'invention avec d'autres contremesures telles que le masquage additif selon l'état de l'art.

**Revendications**

1. Procédé de protection d'un dispositif électronique (SCARD), lorsque le dispositif électronique met en oeuvre un algorithme cryptographique (AES), contre des attaques par canal auxiliaire, l'algorithme cryptographique (AES) opérant sur un tableau d'états (MAT1, MAT2, MAT3), l'algorithme cryptographique (AES) étant conçu pour générer (SHFT_R), à partir d'un tableau d'états courants (MAT1), un deuxième tableau d'états (MAT2) dont chaque ligne est obtenue en opérant un décalage sur la ligne correspondante du tableau d'états courants (MAT1), puis pour générer (MIX_C), à partir du deuxième tableau d'états (MAT2), un troisième tableau d'états (MAT3) dont les éléments de chaque colonne résultent d'un mélange des éléments de la colonne correspondante du deuxième tableau d'états (MAT2), le procédé étant **caractérisé en ce qu'**il comprend le remplacement des deux générations consécutives précitées (SHFT_R, MIX_C) respectivement du deuxième et du troisième tableau d'états (MAT2, MAT3) par une génération sécurisée (SEC_GEN), à partir du tableau d'états courants (MAT1), d'un tableau d'états égal au troisième tableau d'états (MAT3), cette génération sécurisée (SEC_GEN) mélangeant, de façon randomisée, les éléments du tableau d'états courants (MAT1) qui se seraient trouvés sur une même colonne du deuxième tableau d'états (MAT2) si celui-ci avait été généré, afin de produire la colonne correspondante du tableau d'états généré.

2. Procédé de protection selon la revendication 1, dans lequel, chaque élément d'un tableau d'états étant identifié par un indice, le mélange des éléments du tableau d'états courants (MAT1) par la génération sécurisée (SEC_GEN) s'appuie sur une fonction de conversion d'indices prenant en paramètre d'entrée un indice $(i,j)$ d'un élément virtuel du deuxième tableau d'états (MAT2) et fournissant en sortie l'indice $(ic,jc)$ de l'élément correspondant dans le tableau d'états courants (MAT1).

3. Procédé de protection selon l'une des revendications précédentes, dans lequel le décalage appliqué à une ligne lors de la génération (SHFT_R) du deuxième tableau d'états (MAT2) est un décalage de n éléments, n désignant le numéro de la ligne, la première ligne ayant pour numéro n=0.

4. Procédé de protection selon l'une des revendications précédentes, dans lequel le mélange des éléments d'une colonne du deuxième tableau d'états (MAT2) afin d'obtenir un élément du troisième tableau d'états (MAT3) lors de sa génération (MIX_C) est une combinaison linéaire de ces éléments.

5. Procédé de protection selon la revendication 4, dans lequel les scalaires utilisés pour la combinaison linéaire dépendent de la ligne sur laquelle se trouve l'élément du troisième tableau d'états (MAT3).

6. Programme d'ordinateur comprenant une série d'instructions, qui lorsqu'elle est exécutée par un processeur (MP) d'un dispositif électronique (SCARD), conduit le processeur (MP) à mettre en oeuvre un procédé selon l'une des revendications 1 à 5.

7. Support de stockage non transitoire lisible par ordinateur, le support stockant un programme d'ordinateur selon la revendication 6.

8. Dispositif électronique (SCARD) agencé pour mettre en oeuvre un algorithme cryptographique (AES) opérant sur un tableau d'états, l'algorithme cryptographique (AES) étant conçu pour générer (SHFT_R), à partir d'un tableau d'états courants (MAT1), un deuxième tableau d'états (MAT2) dont chaque ligne est obtenue en opérant un décalage sur la ligne correspondante du tableau d'états courants (MAT1), puis pour générer (MIX_C), à partir du deuxième tableau d'états (MAT2), un troisième tableau d'états (MAT3) dont les éléments de chaque colonne résultent d'un mélange des éléments de la colonne correspondante du deuxième tableau d'états (MAT2), le dispositif électronique (SCARD) comprenant un circuit de protection (MP) contre des attaques par canal auxiliaire, le circuit de protection (MP) étant agencé pour remplacer les deux générations consécutives précitées (SHFT_R, MIX_C) respectivement du deuxième et du troisième tableau d'états (MAT2, MAT3) par une génération sécurisée (SEC_GEN), à partir du tableau d'états courants (MAT1), d'un tableau d'états égal au troisième tableau d'états (MAT3), cette génération sécurisée (SEC_GEN) mélangeant, de façon randomisée, les éléments du tableau d'états courants (MAT1) qui se seraient trouvés sur une même colonne du deuxième tableau d'états (MAT2) si celui-ci avait été généré, afin de produire la colonne correspondante du tableau d'états généré.

9. Dispositif électronique (SCARD) selon la revendication 8, dans lequel, chaque élément d'un tableau d'états étant identifié par un indice, le circuit de protection (MP) est agencé pour mélanger des éléments du tableau d'états courants (MAT1) par la génération sécurisée (SEC_GEN) en s'appuyant sur une fonction de conversion d'indices prenant en paramètre d'entrée un indice $(i,j)$ d'un élément virtuel du deuxième tableau d'états (MAT2) et fournissant en sortie l'indice (ic,jc) de l'élément correspondant dans le tableau d'états courants (MAT1).

10. Dispositif électronique (SCARD) selon l'une des revendications 8 ou 9, dans lequel le décalage appliqué à une ligne lors de la génération (SHFT_R) du deuxième tableau d'états (MAT2) est un décalage de n éléments, n désignant le numéro de la ligne, la première ligne ayant pour numéro n=0.

11. Dispositif électronique (SCARD) selon l'une des revendications 8 à 10, dans lequel le mélange des éléments d'une colonne du deuxième tableau d'états (MAT2) afin d'obtenir un élément du troisième tableau d'états (MAT3) lors de sa génération (MIX_C) est une combinaison linéaire de ces éléments.

12. Dispositif électronique (SCARD) selon la revendication 11, dans lequel les scalaires utilisés pour la combinaison linéaire dépendent de la ligne sur laquelle se trouve l'élément du troisième tableau d'états.

**Patentansprüche**

1. Verfahren zum Schutz einer elektronischen Vorrichtung (SCARD), wenn die elektronische Vorrichtung einen kryptographischen Algorithmus (AES) einsetzt, vor Angriffen eines Seitenkanals, wobei der kryptographische Algorithmus (AES) auf eine Zustandstabelle (MAT1, MAT2, MAT3) einwirkt, wobei der kryptographische Algorithmus (AES) dazu vorgesehen ist, aus einer laufenden Zustandstabelle (MAT1) eine zweite Zustandstabelle (MAT2) zu erzeugen (SHFT_R), bei der jede Zeile erhalten wird indem ein Versatz auf der entsprechenden Zeile der laufenden Zustandstabelle (MAT1) durchgeführt wird, dann aus der zweiten Zustandstabelle (MAT2) eine dritte Zustandstabelle (MAT3) zu erzeugen (MIX_C), bei der die Elemente jeder Spalte aus einer Mischung der Elemente der entsprechenden Spalte der zweiten Zustandstabelle (MAT2) hervorgehen, wobei das Verfahren **dadurch gekennzeichnet ist, dass** es den Ersatz der beiden vorgenannten aufeinanderfolgenden Generierungen (SHFT_R, MIX_C) der zweiten bzw. dritten Zustandstabelle (MAT2, MAT3) durch eine gesicherte Erzeugung (SEC_GEN), auf Basis der laufenden Zustandstabelle (MAT1), einer Zustandstabelle gleich der dritten Zustandstabelle (MAT3) umfasst, wobei diese gesicherte Erzeugung (SEC_GEN) auf randomisierte Weise die Elemente der laufenden Zustandstabelle (MAT1), die sich in einer selben Spalte der zweiten Zustandstabelle (MAT2) befunden hätten, wenn diese erzeugt worden wäre, mischt, um die entsprechende Spalte der erzeugten Zustandstabelle zu erzeugen.

2. Schutzverfahren nach Anspruch 1, bei dem jedes Element einer Zustandstabelle durch einen Index identifiziert ist, sich das Mischen der Elemente der laufenden Zustandstabelle (MAT1) durch die gesicherte Erzeugung (SEC_GEN) auf eine Indexkonversionsfunktion stützt, die als Eingangsparameter einen Index (i, j) eines virtuellen Elements der zweiten Zustandstabelle (MAT2) heranzieht und am Ausgang den Index (ic, jc) des entsprechenden Elements in der laufenden Zustandstabelle (MAT1) liefert.

3. Schutzverfahren nach einem der vorhergehenden Ansprüche, bei dem der Versatz, der an eine Zeile bei der Erzeugung (SHFT_R) der zweiten Zustandstabelle (MAT2) angelegt wird, ein Versatz von n Elementen ist, wobei n die Nummer der Zeile bezeichnet, wobei die erste Zeile die Nummer n = 0 hat.

4. Schutzverfahren nach einem der vorhergehenden Ansprüche, bei dem das Mischen der Elemente einer Spalte der zweiten Zustandstabelle (MAT2), um ein Element der dritten Zustandstabelle (MAT3) bei ihrer Erzeugung (MIX_C) zu erhalten, eine lineare Kombination dieser Elemente ist.

5. Schutzverfahren nach Anspruch 4, bei dem die für die lineare Kombination verwendeten Skalarsysteme von der Zeile abhängen, auf der sich das Element der dritten Zustandstabelle (MAT3) befindet.

6. Computerprogramm, umfassend eine Reihe von Befehlen, die bei einer Ausführung durch einen Prozessor (MP) einer elektronischen Vorrichtung (SCARD) den Prozessor (MP) dazu veranlassen, ein Verfahren nach einem der Ansprüche 1 bis 5 einzusetzen.

7. Nicht transitorischer, von einem Computer lesbarer Speicherträger, wobei der Träger ein Computerprogramm nach Anspruch 6 speichert.

8. Elektronische Vorrichtung (SCARD), die dazu eingerichtet ist, einen kryptographischen Algorithmus (AES) einzusetzen, der auf eine Zustandstabelle einwirkt, wobei der kryptographische Algorithmus (AES) dazu vorgesehen ist, aus einer laufenden Zustandstabelle (MAT1) eine zweite Zustandstabelle (MAT2) zu erzeugen (SHFT_R), bei der jede Zeile erhalten wird indem ein Versatz auf der entsprechenden Zeile der laufenden Zustandstabelle (MAT1) durchgeführt wird, dann aus der zweiten Zustandstabelle (MAT2) eine dritte Zustandstabelle (MAT3) zu erzeugen (MIX_C), bei der die Elemente jeder Spalte aus einer Mischung der Elemente der entsprechenden Spalte der zweiten Zustandstabelle (MAT2) hervorgehen, wobei die elektronische Vorrichtung (SCARD) eine Schutzschaltung (MP) vor Angriffen durch einen Seitenkanal umfasst, wobei die Schutzschaltung (MP) dazu vorgesehen ist, die beiden vorgenannten aufeinanderfolgenden Generierungen (SHFT_R, MIX_C) der zweiten bzw. dritten Zustandstabelle (MAT2, MAT3) durch eine gesicherte Erzeugung (SEC_GEN), auf Basis der laufenden Zustandstabelle (MAT1), einer Zustandstabelle gleich der dritten Zustandstabelle (MAT3) zu ersetzen, wobei diese gesicherte Erzeugung (SEC_GEN) auf randomisierte Weise die Elemente der laufenden Zustandstabelle (MAT1), die sich in einer selben Spalte der zweiten Zustandstabelle (MAT2) befunden hätten, wenn diese erzeugt worden wäre, mischt, um die entsprechende Spalte der erzeugten Zustandstabelle zu erzeugen.

9. Elektronische Vorrichtung (SCARD) nach Anspruch 8, bei der jedes Element einer Zustandstabelle durch einen Index identifiziert ist, die Schutzschaltung (MP) dazu vorgesehen ist, Elemente der laufenden Zustandstabelle (MAT1) durch die gesicherte Erzeugung (SEC_GEN) zu mischen, wobei eine Indexkonversionsfunktion genutzt wird, die als Eingangsparameter einen Index (i, j) eines virtuellen Elements der zweiten Zustandstabelle (MAT2) heranzieht und am Ausgang den Index (ic, jc) des entsprechenden Elements in der laufenden Zustandstabelle (MAT1) liefert.

10. Elektronische Vorrichtung (SCARD) nach einem der Ansprüche 8 oder 9, bei der der Versatz, der an eine Zeile bei der Erzeugung (SHFT_R) der zweiten Zustandstabelle (MAT2) angelegt wird, ein Versatz von n Elementen ist, wobei n die Nummer der Zeile bezeichnet, wobei die erste Zeile die Nummer n = 0 hat.

11. Elektronische Vorrichtung (SCARD) nach einem der Ansprüche 8 bis 10, bei der das Mischen der Elemente einer Spalte der zweiten Zustandstabelle (MAT2), um ein Element der dritten Zustandstabelle (MAT3) bei ihrer Erzeugung (MIX_C) zu erhalten, eine lineare Kombination dieser Elemente ist.

12. Elektronische Vorrichtung (SCARD) nach Anspruch 11, bei der die für die lineare Kombination verwendeten Skalarsysteme von der Zeile abhängen, auf der sich das Element der dritten Zustandstabelle befindet.

## Claims

1. A protection method for protecting an electronic device (SCARD), when the electronic device implements a cryptographic algorithm (AES), against side channel attacks, the cryptographic algorithm (AES) working with a state array (MAT1, MAT2, MAT3), the cryptographic algorithm (AES) being designed to generate (SHFT_R), from a current state array (MAT1), a second state array (MAT2) in which each row is obtained by shifting the corresponding row of the current state array (MAT1), then to generate (MIX_C), from the second state array (MAT2), a third state array (MAT3) in which the elements of each column are the result of mixing elements of the corresponding column of the second state array (MAT2), the method being **characterized in that** it comprises replacing said two consecutive generations (SHFT_R, MIX_C) of the respective second and third state array (MAT2, MAT3) by a secure generation (SEC_GEN), from the current state array (MAT1), of a state array equal to the third state array (MAT3), this secure generation (SEC_GEN) mixing, in a randomized manner, the elements of the current state array (MAT1) that would have been located in a same column of the second state array (MAT2) if said second state array had been generated, in order to produce the corresponding column of the generated state array.

2. The protection method according to claim 1, wherein, each element of a state array having been identified by an index, the mixing of the elements of the current state array (MAT1) by secure generation (SEC_GEN) is based on an index conversion function that takes as its input parameter an index (i,j) of a virtual element of the second state array (MAT2) and outputs the index (ic,jc) of the corresponding element in the current state array (MAT1).

3. The protection method according to one of the preceding claims, wherein the shift applied to a row during generation (SHFT_R) of the second state array (MAT2) is a shift of n elements, n indicating the row number, the first row being numbered n = 0.

4. The protection method according to one of the preceding claims, wherein the mixing of elements of a column of the second state array (MAT2) in order to obtain an element of the third state array (MAT3) during its generation (MIX_C) is a linear combination of these elements.

**5.** The protection method according to claim 4, wherein the scalars used for the linear combination are dependent on the row where the element of the third state array (MAT3) is located.

**6.** A computer program comprising a set of instructions which, when executed by a processor (MP) of an electronic device (SCARD), leads the processor (MP) to implement a method according to one of claims 1 to 5.

**7.** A computer-readable non-transitory storage medium in which a computer program according to claim 6 is stored.

**8.** An electronic device (SCARD) arranged to implement a cryptographic algorithm (AES) working with a state array, the cryptographic algorithm (AES) being designed to generate (SHFT_R), from a current state array (MAT1), a second state array (MAT2) in which each row is obtained by shifting the corresponding row of the current state array (MAT1), then to generate (MIX_C), from the second state array (MAT2), a third state array (MAT3) in which the elements of each column are the result of mixing elements of the corresponding column of the second state array (MAT2), the electronic device (SCARD) comprising a protection circuit (MP) to protect against side channel attacks, the protection circuit (MP) being arranged to replace said two consecutive generations (SHFT_R, MIX_C) of the respective second and third state array (MAT2, MAT3) by a secure generation (SEC_GEN), from the current state array (MAT1), of a state array equal to the third state array (MAT3), this secure generation (SEC_GEN) mixing, in a randomized manner, the elements of the current state array (MAT1) that would have been located in a same column of the second state array (MAT2) if said second state table had been generated, in order to produce the corresponding column of the generated state array.

**9.** The electronic device (SCARD) according to claim 8, wherein, each element of a state array being identified by an index, the protection circuit (MP) is arranged to mix elements of the current state array (MAT1) by secure generation (SEC_GEN) based on an index conversion function that takes as its input parameter an index $(i,j)$ of a virtual element of the second state array (MAT2) and outputs the index $(ic,jc)$ of the corresponding element in the current state array (MAT1).

**10.** The electronic device (SCARD) according to one of claims 8 or 9, wherein the shift applied to a row during generation (SHFT_R) of the second state array (MAT2) is a shift of n elements, n denoting the row number, the first row being numbered $n = 0$.

**11.** The electronic device (SCARD) according to one of claims 8 to 10, wherein the mixing of elements of a column of the second state array (MAT2) in order to obtain an element of the third state array (MAT3) during its generation (MIX_C) is a linear combination of these elements.

**12.** The electronic device (SCARD) according to claim 11, wherein the scalars used for the linear combination are dependent on the row where the element of the third state array is located.

| 1. AddRoundKey |
| --- |

| Effectuer pendant neuf tours les étapes 2 à 5: |
| --- |
| 2. SubBytes |
| 3. ShiftRows |
| 4. MixColumns |
| 5. AddRoundKey |

| 6. SubBytes |
| --- |
| 7. ShiftRows |
| 8. AddRoundKey |

AES

SHFT_R

MIX_C

## FIG. 1

SHFT_R

MAT1          MAT2

## FIG. 2

$$\begin{pmatrix} Y_{00} & Y_{01} & Y_{02} & Y_{03} \\ Y_{10} & Y_{11} & Y_{12} & Y_{13} \\ Y_{20} & Y_{21} & Y_{22} & Y_{23} \\ Y_{30} & Y_{31} & Y_{32} & Y_{33} \end{pmatrix} = \begin{pmatrix} 02 & 03 & 01 & 01 \\ 01 & 02 & 03 & 01 \\ 01 & 01 & 02 & 03 \\ 03 & 01 & 01 & 02 \end{pmatrix} * \begin{pmatrix} Y_{00} & Y_{01} & Y_{02} & Y_{03} \\ Y_{10} & Y_{11} & Y_{12} & Y_{13} \\ Y_{20} & Y_{21} & Y_{22} & Y_{23} \\ Y_{30} & Y_{31} & Y_{32} & Y_{33} \end{pmatrix}$$

MAT3    MIX_C    MAT2

## FIG. 3

MAT1

MixColumn(0,1)    MixColumn(0,3)    MixColumn(0,2)    MixColumn(0,0)

OUT    OUT    OUT    OUT

SEC_GEN

## FIG. 4

FIG. 5

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MARC JOYE ; PASCAL PAILLIER ; BERRY SCHOENMAKERS.** On Second-Order Differential Power Analysis. *Cryptographic Hardware and Embedded Systems, CHES 2005, Lecture Notes in Computer Science,* 2005, vol. 3659, 293-308
- **JIQIANG LU ; JING PAN ; JERRY DEN HARTOG.** Principles on the Security of AES against First and Second-Order Differential Power Analysis. *ACNS,* 2010, 6123
- An AES Smart Card Implementation Résistant to Power Analysis Attacks. ACNS 2006. LNCS. Springer, 2006, vol. 3989, 239-252
- **GUIDO BERTONI ; LUCA BREVEGLIERI ; PASQUALINA FRAGNETO ; MARCO MACCHETTI ; STEFANO MARCHESIN.** Efficient Software Implementation of AES on 32-Bit Platforms. *Cryptographic Hardware and Embedded Systems - CHES 2002, Lecture Notes in Computer Science,* 2003, vol. 2523-2003, 129-142
- **SHEIKH MUHAMMAD FARHAN.** High Data Rate 8-Bit Crypto Processor. *Proceedings of the ISSA 2004 Enabling Tomorrow Conference,* 01 Janvier 2004
- **BO YU et al.** An AES chip with DPA résistance using hardware-based random order execution. *JOURNAL OF SEMICONDUCTORS,* 01 Juin 2012, vol. 33 (6
- Fédéral Information Processing Standards Publication 197. *le NIST,* 26 Novembre 2001
- The LED Block Cipher. **DE JIAN GUO ; THOMAS PEYRIN ; AXEL POSCHMANN ; MATT ROBSHAW.** CHES 2011, LNCS 6917. Springer-Verlag, 2011, 326-341